(19) Europäisches Patentamt
European Patent Office
Office européen des brevets

(11) **EP 4 492 904 A1**

(12) **EUROPEAN PATENT APPLICATION**
published in accordance with Art. 153(4) EPC

(43) Date of publication:
**15.01.2025 Bulletin 2025/03**

(21) Application number: **23787493.8**

(22) Date of filing: **24.03.2023**

(51) International Patent Classification (IPC):
*H04W 74/00* (2009.01)

(52) Cooperative Patent Classification (CPC):
**H04W 74/00**

(86) International application number:
**PCT/CN2023/083607**

(87) International publication number:
**WO 2023/197847 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2022 CN 202210379989
16.08.2022 CN 202210982583**

(71) Applicant: **Huawei Technologies Co., Ltd.
Shenzhen, Guangdong 518129 (CN)**

(72) Inventors:
• **RAN, Tiantian
Shenzhen, Guangdong 518129 (CN)**

• **LI, Jiaojiao
Shenzhen, Guangdong 518129 (CN)**
• **ZHAI, Peng
Shenzhen, Guangdong 518129 (CN)**
• **CHANG, Junren
Shenzhen, Guangdong 518129 (CN)**
• **YAO, Qinbo
Shenzhen, Guangdong 518129 (CN)**
• **YUE, Jianpeng
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND APPARATUS**

(57) Embodiments of this application provide a communication method and apparatus. The method includes: A terminal device receives, from a network device, first indication information indicating priorities of a plurality of features, and determines a first value of a feature in a feature combination based on the priorities of the plurality of features, where the first value of the feature is for determining a second value of the feature combination, the second value of the feature combination is for selecting a random access resource, the feature combination includes at least one feature, and the at least one feature belongs to the plurality of features. The second value that is of the feature combination and that is for selecting the random access resource is determined based on the priorities of the plurality of features, to avoid directly selecting the random access resource based on the priorities of the plurality of features. This helps reduce complexity of selecting the random access resource by the terminal device.

FIG. 5

## Description

This application claims priority to Chinese Patent Application No. 202210379989.6, filed with the China National Intellectual Property Administration on April 12, 2022 and entitled "COMMUNICATION METHOD AND APPARATUS", and to Chinese Patent Application No. 202210982583.7, filed with the China National Intellectual Property Administration on August 16, 2022 and entitled "COMMUNICATION METHOD AND APPARATUS", both of which are incorporated herein by reference in their entireties.

## TECHNICAL FIELD

This application relates to the communication field, and more specifically, to a communication method and apparatus.

## BACKGROUND

Random access is a step in a process in which a terminal device is connected to a network. Currently, in the random access process, when the terminal device supports features (for example, a reduced capability, small data transmission, coverage enhancement, and network slicing enhancement), the terminal device needs to consider priorities of different features when selecting a random access resource.

Currently, logic of selecting the random access resource by the terminal device based on the priorities of the different features is complex, and implementation complexity is high. How to reduce the complexity of selecting the random access resource becomes a problem to be urgently resolved.

## SUMMARY

Embodiments of this application provide a communication method and apparatus, to reduce complexity of selecting a random access resource.

According to a first aspect, a communication method is provided. The method may be performed by a terminal device, or may be performed by a component (for example, a chip or a circuit) of the terminal device. This is not limited. For ease of description, an example in which the method is performed by the terminal device is used below for description.

The communication method includes: The terminal device receives first indication information from a network device, where the first indication information indicates priorities of a plurality of features. The terminal device determines a first value of a feature in a feature combination based on the priorities of the plurality of features, where the first value of the feature is for determining a second value of the feature combination, the second value of the feature combination is for selecting a random access resource, the feature combination includes at least one feature, and the at least one feature belongs to the plurality of features.

According to the foregoing technical solution, after receiving the indication information indicating the priorities of the features, the terminal device may determine the first value of the feature in the feature combination based on the priorities of the features, where the first value is for determining the second value of the feature combination, and the second value of the feature combination is for selecting the random access resource. In other words, the terminal device may not directly select the random access resource based on priorities of different features, but determine the first value of the feature in the feature combination based on the priorities of the different features, determine the second value of the feature combination based on the first value, and then select the random access resource based on the second value of the feature combination. This manner of selecting the random resource can reduce complexity of logic of selecting the random access resource by the terminal device, to reduce a delay of a random access process.

For example, when the terminal device directly selects the random access resource based on the priorities of the different features, the terminal device needs to perform an iteration (or cycle) process of random access resource selection. Consequently, logic is complex, and implementation complexity is high. However, when the random access resource is selected based on the second value of the feature combination, the iteration process of the random access resource selection does not need to be performed. Instead, the random access resource is selected based on the second value of the feature combination after the second value of the feature combination is determined.

For example, that the terminal device determines a first value of a feature in a feature combination, where the first value of the feature is for determining a second value of the feature combination may be understood as: The terminal device determines the second value of the feature combination, where the second value of the feature combination is determined based on the first value of the feature in the feature combination, and the first value of the feature in the feature combination is determined based on the priorities of the plurality of features.

With reference to the first aspect, in some implementations of the first aspect, a first value of a first feature and a first value in a set of second features satisfy the following relationship: The first value of the first feature is greater than a sum of the first value in the set of second features, where the first feature is one of the at least one feature, and the set of second features is a set of all features that are in the at least one feature and whose priorities are lower than a priority of the first feature.

According to the foregoing technical solution, the first value that is of the feature in the feature combination and that is determined by the terminal device based on the priorities of the plurality of features needs to satisfy a specific rule (for example, a first value of a high-priority feature in the feature combination is greater than a sum of first values of all features that are in the feature combination and whose priorities are lower than a priority of the high-priority feature). To be specific, if the network device configures a random access resource related to a feature with a high priority, the terminal device may select, in a random access resource selection process according to the rule, the random access resource related to the feature with the high priority.

With reference to the first aspect, in some implementations of the first aspect, a priority of the at least one feature and a non-negative integer corresponding to the at least one feature satisfy the following relationship: A higher priority of a feature indicates a larger non-negative integer corresponding to the feature, where the non-negative integer corresponding to the feature is for determining a first value of the feature.

With reference to the first aspect, in some implementations of the first aspect, the non-negative integer corresponding to the feature and the first value of the feature satisfy the following relationship: $Z=X^N+Y$, or $Z=X^N$, where Z represents the first value of the feature, N represents the non-negative integer corresponding to the feature, X is an integer greater than or equal to 1, and Y is a constant (for example, an integer or a non-zero integer). Specifically, if the non-negative integer corresponding to the feature and the first value of the feature satisfy the relationship $Z=X^N+Y$, and Y is 0, it may be understood that the non-negative integer corresponding to the feature and the first value of the feature satisfy the relationship $Z=X^N$. With reference to the first aspect, in some implementations of the first aspect, a priority of the at least one feature and a non-negative integer corresponding to the at least one feature satisfy the following relationship: A higher priority of a feature indicates a smaller non-negative integer corresponding to the feature, where the non-negative integer corresponding to the feature is for determining a first value of the feature.

According to the foregoing technical solution, the first value of the feature may be determined based on the non-negative integer corresponding to the feature, to reduce complexity of determining the first value of the feature.

With reference to the first aspect, in some implementations of the first aspect, the non-negative integer corresponding to the feature and the first value of the feature satisfy the following relationship: $Z=X^{M1-N}+Y$, or $Z=X^{M1-N}$, where Z represents the first value of the feature, N represents the non-negative integer corresponding to the feature, X is an integer greater than or equal to 1, Y is a constant, and M1 is related to a quantity of the at least one feature or is related to a quantity of the plurality of features.

With reference to the first aspect, in some implementations of the first aspect, the non-negative integer corresponding to the at least one feature is M2 consecutive positive integers from 0 to M2-1, and M2 is the quantity of the at least one feature.

With reference to the first aspect, in some implementations of the first aspect, the second value of the feature combination is a sum of a first value of the at least one feature included in the feature combination.

According to the foregoing technical solution, the second value of the feature combination may be the sum of the first values of all the features included in the feature combination, to reduce complexity of determining the second value of the feature combination.

With reference to the first aspect, in some implementations of the first aspect, the method further includes: The terminal device selects a random access resource for a first feature combination, where a second value of the first feature combination is largest among a plurality of second values of a plurality of feature combinations, and a feature included in one of the plurality of feature combinations is one or more of features in a feature combination for triggering a random access process.

According to a second aspect, a communication method is provided. The method may be performed by a network device, or may be performed by a component (for example, a chip or a circuit) of the network device. This is not limited. For ease of description, an example in which the method is performed by the network device is used below for description.

The communication method includes: The network device determines to configure a plurality of features. The network device sends second indication information to a terminal device, where the second indication information indicates a non-negative integer corresponding to a feature in the plurality of features, the non-negative integer corresponding to the feature is for determining a priority of the feature, and the priority of the feature is for selecting a random access resource.

According to the foregoing technical solution, the network device may send, to the terminal device, the non-negative integer corresponding to the feature in the plurality of features, so that the terminal device determines a first value of a feature in a feature combination based on the non-negative integer corresponding to the feature, where the first value is for determining a second value of the feature combination, and the second value of the feature combination is for selecting the random access resource. In other words, the terminal device may not directly select the random access resource based on priorities of different features, but determine the first value of the feature in the feature combination based on the priorities of the different features, determine the second value of the feature combination based on the first value, and then select the random access resource based on the second value of the feature combination. This manner of selecting the random resource can reduce complexity of logic of selecting the random access resource by the terminal device, to reduce a delay of a random access process.

With reference to the second aspect, in some implementations of the second aspect, the method further includes: The network device determines the priority of the feature in the plurality of features, where the priorities of the plurality of features and the non-negative integers corresponding to the plurality of features satisfy the following relationship: A higher priority of a feature indicates a larger non-negative integer corresponding to the feature, where the non-negative integer corresponding to the feature is for determining a first value of the feature.

With reference to the second aspect, in some implementations of the second aspect, the non-negative integer corresponding to the feature and the first value of the feature satisfy the following relationship: $Z=X^N+Y$, or $Z=X^N$, where $Z$ represents the first value of the feature, $N$ represents the non-negative integer corresponding to the feature, $X$ is an integer greater than or equal to 1, and $Y$ is a constant.

With reference to the second aspect, in some implementations of the second aspect, the method further includes: The network device determines the priority of the feature in the plurality of features, where the priorities of the plurality of features and the non-negative integers corresponding to the plurality of features satisfy the following relationship: A higher priority of a feature indicates a smaller non-negative integer corresponding to the feature, where the non-negative integer corresponding to the feature is for determining a first value of the feature.

With reference to the second aspect, in some implementations of the second aspect, the non-negative integers corresponding to the plurality of features are M3 consecutive positive integers from 0 to M3-1, and M3 is a quantity of the plurality of features.

According to a third aspect, a communication method is provided. The method may be performed by a terminal device, or may be performed by a component (for example, a chip or a circuit) of the terminal device. This is not limited. For ease of description, an example in which the method is performed by the terminal device is used below for description.

The communication method includes: The terminal device receives second indication information from a network device, where the second indication information indicates a non-negative integer corresponding to a feature in a plurality of features. The terminal device determines a first value of a feature in a feature combination based on the non-negative integer corresponding to the feature, where the first value of the feature is for determining a second value of the feature combination, the second value of the feature combination is for selecting a random access resource, the feature combination includes at least one feature, and the at least one feature belongs to the plurality of features.

With reference to the third aspect, in some implementations of the third aspect, a first value of a first feature and a first value in a set of second features satisfy the following relationship: The first value of the first feature is greater than a sum of the first value in the set of second features, where the first feature is one of the at least one feature, and the set of second features is a set of all features that are in the at least one feature and whose first values are less than the first value of the first feature.

With reference to the third aspect, in some implementations of the third aspect, the first value of the feature satisfies the following relationship: $Z=X^N+Y$, or $Z=X^N$, where $Z$ represents the first value of the feature, $N$ represents the non-negative integer corresponding to the feature, $X$ is an integer greater than or equal to 1, and $Y$ is a constant.

With reference to the third aspect, in some implementations of the third aspect, the first value of the feature satisfies the following relationship: $Z=X^{M1-N}+Y$, or $Z=X^{M1-N}$, where $Z$ represents the first value of the feature, $N$ represents the non-negative integer corresponding to the feature, $X$ is an integer greater than or equal to 1, $Y$ is a constant, and M1 is related to a quantity of the at least one feature or is related to a quantity of the plurality of features.

With reference to the third aspect, in some implementations of the third aspect, the second value of the feature combination is a sum of a first value of the at least one feature included in the feature combination.

With reference to the third aspect, in some implementations of the third aspect, the method further includes: The terminal device selects a random access resource for a first feature combination, where a second value of the first feature combination is largest among a plurality of second values of a plurality of feature combinations, and a feature included in one of the plurality of feature combinations is one or more of features in a feature combination for triggering a random access process.

For beneficial effects of the method in the third aspect and the possible designs of the third aspect, refer to the beneficial effects in the second aspect and the possible designs of the second aspect.

According to a fourth aspect, a communication method is provided. The method may be performed by a network device, or may be performed by a component (for example, a chip or a circuit) of the network device. This is not limited. For ease of description, an example in which the method is performed by the network device is used below for description.

The communication method includes: The network device determines a first value of a feature in a plurality of features. The network device sends third indication information to a terminal device, where the third indication information indicates the first value of the feature in the plurality of features, and a first value of a third feature and a first value in a fourth-feature set satisfy the following relationship: The first value of the third feature is greater than a sum of the first value in the fourth-feature set, where the third feature is one of the plurality of features, and the fourth-feature set is a set of all features that are in the plurality of features and whose first values are less than the first value of the third feature.

According to the foregoing technical solution, the network device may send the first value of the feature in the plurality of features to the terminal device, so that the terminal device determines a second value of a feature combination based on the first value, and then selects a random access resource based on the second value of the feature combination. In other words, the terminal device may not directly select the random access resource based on priorities of different features. This manner of selecting the random resource can reduce complexity of logic of selecting the random access resource by the terminal device, to reduce a delay of a random access process.

The third indication information may be broadcast information, and the same features are configured for all terminal devices. Alternatively, the third indication information is dedicated signaling, and the plurality of features are configured for a specific terminal device. For example, a feature included in a corresponding feature combination for the terminal device to trigger random access may be configured.

With reference to the fourth aspect, in some implementations of the fourth aspect, the first value of the feature satisfies the following relationship: $Z=X^N+Y$, or $Z=X^N$, where Z represents the first value of the feature, N represents a non-negative integer corresponding to the feature, X is an integer greater than or equal to 1, and Y is a constant.

With reference to the fourth aspect, in some implementations of the fourth aspect, the first value of the feature satisfies the following relationship: $Z=X^{M4-N}+Y$, or $Z=X^{M4-N}$, where Z represents the first value of the feature, N represents a non-negative integer corresponding to the feature, X is an integer greater than or equal to 1, Y is a constant, and M4 is related to a quantity of the plurality of features.

According to a fifth aspect, a communication method is provided. The method may be performed by a terminal device, or may be performed by a component (for example, a chip or a circuit) of the terminal device. This is not limited. For ease of description, an example in which the method is performed by the terminal device is used below for description.

The communication method includes: The terminal device receives third indication information from a network device, where the third indication information indicates a first value of a feature in priorities of a plurality of features. The terminal device determines a second value of a feature combination based on the first value of the feature, where the second value of the feature combination is for selecting a random access resource, and a first value of a third feature and a first value in a fourth-feature set satisfy the following relationship: The first value of the third feature is greater than a sum of the first value in the fourth-feature set, where the third feature is one of the plurality of features, and the fourth-feature set is a set of all features that are in the plurality of features and whose first values are less than the first value of the third feature.

With reference to the fifth aspect, in some implementations of the fifth aspect, the first value of the feature satisfies the following relationship: $Z=X^N+Y$, or $Z=X^N$, where Z represents the first value of the feature, N represents a non-negative integer corresponding to the feature, X is an integer greater than or equal to 1, and Y is a constant.

With reference to the fifth aspect, in some implementations of the fifth aspect, the first value of the feature satisfies the following relationship: $Z=X^{M4-N}+Y$, or $Z=X^{M4-N}$, where Z represents the first value of the feature, N represents a non-negative integer corresponding to the feature, X is an integer greater than or equal to 1, Y is a constant, and M4 is related to a quantity of the plurality of features.

With reference to the fifth aspect, in some implementations of the fifth aspect, the second value of the feature combination is a sum of a first value of at least one feature included in the feature combination.

With reference to the fifth aspect, in some implementations of the fifth aspect, the method further includes: The terminal device selects a random access resource for a first feature combination, where a second value of the first feature combination is largest among a plurality of second values of a plurality of feature combinations, and a feature included in one of the plurality of feature combinations is one or more of features in a feature combination for triggering a random access process.

For beneficial effects of the method in the fifth aspect and the possible designs of the fifth aspect, refer to the beneficial effects in the fourth aspect and the possible designs of the fourth aspect.

According to a sixth aspect, a communication apparatus is provided. The apparatus is configured to perform the method provided in the first aspect.

The apparatus includes: a receiving unit, configured to receive first indication information from a network device, where the first indication information indicates priorities of a plurality of features; and a processing unit, configured to determine a first value of a feature in a feature combination based on the priorities of the plurality of features, where the first value of the feature is for determining a second value of the feature combination, the second value of the feature combination is for selecting a random access resource, the feature combination includes at least one feature, and the at least one feature belongs to the plurality of features.

With reference to the sixth aspect, in some implementations of the sixth aspect, a first value of a first feature and a first value in a set of second features satisfy the following relationship: The first value of the first feature is greater than a sum of the first value in the set of second features, where the first feature is one of the at least one feature, and the set of second features is a set of all features that are in the at least one feature and whose priorities are lower than a priority of the first feature.

With reference to the sixth aspect, in some implementations of the sixth aspect, a priority of the at least one feature and a non-negative integer corresponding to the at least one feature satisfy the following relationship: A higher priority of a feature indicates a larger non-negative integer corresponding to the feature, where the non-negative integer corresponding to the feature is for determining a first value of the feature.

With reference to the sixth aspect, in some implementations of the sixth aspect, the non-negative integer corresponding to the feature and the first value of the feature satisfy the following relationship: $Z=X^N+Y$, or $Z=X^N$, where Z represents the first value of the feature, N represents the non-negative integer corresponding to the feature, X is an integer greater than or equal to 1, and Y is a constant.

With reference to the sixth aspect, in some implementations of the sixth aspect, a priority of the at least one feature and a non-negative integer corresponding to the at least one feature satisfy the following relationship: A higher priority of a feature indicates a smaller non-negative integer corresponding to the feature, where the non-negative integer corresponding to the feature is for determining a first value of the feature.

With reference to the sixth aspect, in some implementations of the sixth aspect, the non-negative integer corresponding to the feature and the first value of the feature satisfy the following relationship: $Z=X^{M1-N}+Y$, or $Z=X^{M1-N}$, where Z represents the first value of the feature, N represents the non-negative integer corresponding to the feature, X is an integer greater than or equal to 1, Y is a constant, and M1 is related to a quantity of the at least one feature or is related to a quantity of the plurality of features.

With reference to the sixth aspect, in some implementations of the sixth aspect, the non-negative integer corresponding to the at least one feature is M2 consecutive positive integers from 0 to M2-1, and M2 is the quantity of the at least one feature.

With reference to the sixth aspect, in some implementations of the sixth aspect, the second value of the feature combination is a sum of a first value of the at least one feature included in the feature combination.

With reference to the sixth aspect, in some implementations of the sixth aspect, the processing unit is further configured to select a random access resource for a first feature combination, where a second value of the first feature combination is largest among a plurality of second values of a plurality of feature combinations, and a feature included in one of the plurality of feature combinations is one or more of features in a feature combination for triggering a random access process.

For beneficial effects of the method in the sixth aspect and the possible designs of the sixth aspect, refer to the beneficial effects in the first aspect and the possible designs of the first aspect.

According to a seventh aspect, a communication apparatus is provided. The apparatus is configured to perform the method provided in the second aspect.

The apparatus includes: a processing unit, configured to determine to configure a plurality of features; and a sending unit, configured to send second indication information to a terminal device, where the second indication information indicates a non-negative integer corresponding to a feature in the plurality of features, the non-negative integer corresponding to the feature is for determining a priority of the feature, and the priority of the feature is for selecting a random access resource.

With reference to the seventh aspect, in some implementations of the seventh aspect, the processing unit is further configured to determine the priority of the feature in the plurality of features, where the priorities of the plurality of features and the non-negative integers corresponding to the plurality of features satisfy the following relationship: A higher priority of a feature indicates a larger non-negative integer corresponding to the feature.

With reference to the seventh aspect, in some implementations of the seventh aspect, the processing unit is further configured to determine the priority of the feature in the plurality of features, where the priorities of the plurality of features and the non-negative integers corresponding to the plurality of features satisfy the following relationship: A higher priority of a feature indicates a smaller non-negative integer corresponding to the feature.

With reference to the seventh aspect, in some implementations of the seventh aspect, the non-negative integers corresponding to the plurality of features are M3 consecutive positive integers from 0 to M3-1, and M3 is a quantity of the plurality of features.

For beneficial effects of the apparatus in the seventh aspect and the possible designs of the seventh aspect, refer to the beneficial effects in the second aspect and the possible designs of the second aspect.

According to an eighth aspect, a communication apparatus is provided. The apparatus is configured to perform the method provided in the third aspect.

The apparatus includes: a receiving unit, configured to receive second indication information from a network device, where the second indication information indicates a non-negative integer corresponding to a feature in a plurality of features; and a processing unit, configured to determine a first value of a feature in a feature combination based on the non-negative integer corresponding to the feature, where the first value of the feature is for determining a second value of the feature combination, the second value of the feature combination is for selecting a random access resource, the feature combination includes at least one feature, and the at least one feature belongs to the plurality of features.

With reference to the eighth aspect, in some implementations of the eighth aspect, a first value of a first feature and a first value in a set of second features satisfy the following relationship: The first value of the first feature is greater than a sum of the first value in the set of second features, where the first feature is one of the at least one feature, and the set of second features is a set of all features that are in the at least one feature and whose first values are less than the first value of the first feature.

With reference to the eighth aspect, in some implementations of the eighth aspect, the first value of the feature satisfies the following relationship: $Z=X^N+Y$, or $Z=X^N$, where Z represents the first value of the feature, N represents the non-negative integer corresponding to the feature, X is an integer greater than or equal to 1, and Y is a constant.

With reference to the eighth aspect, in some implementations of the eighth aspect, the first value of the feature satisfies the following relationship: $Z=X^{M1-N}+Y$, or $Z=X^{M1-N}$, where Z represents the first value of the feature, N represents the non-negative integer corresponding to the feature, X is an integer greater than or equal to 1, Y is a constant, and M1 is related to a quantity of the at least one feature or is related to a quantity of the plurality of features.

With reference to the eighth aspect, in some implementations of the eighth aspect, the second value of the feature combination is a sum of a first value of the at least one feature included in the feature combination.

With reference to the eighth aspect, in some implementations of the eighth aspect, the processing unit is further configured to select a random access resource for a first feature combination, where a second value of the first feature combination is largest among a plurality of second values of a plurality of feature combinations, and a feature included in one of the plurality of feature combinations is one or more of features in a feature combination for triggering a random access process.

For beneficial effects of the method in the eighth aspect and the possible designs of the eighth aspect, refer to the beneficial effects in the third aspect and the possible designs of the third aspect.

According to a ninth aspect, a communication apparatus is provided. The apparatus is configured to perform the method provided in the fourth aspect.

The apparatus includes: a processing unit, configured to determine a first value of a feature in a plurality of features; and a sending unit, configured to send third indication information to a terminal device, where the third indication information indicates the first value of the feature in the plurality of features, and a first value of a third feature and a first value in a fourth-feature set satisfy the following relationship: The first value of the third feature is greater than a sum of the first value in the fourth-feature set, where the third feature is one of the plurality of features, and the fourth-feature set is a set of all features that are in the plurality of features and whose first values are less than the first value of the third feature.

With reference to the ninth aspect, in some implementations of the ninth aspect, the first value of the feature satisfies the following relationship: $Z=X^N+Y$, or $Z=X^N$, where Z represents the first value of the feature, N represents a non-negative integer corresponding to the feature, X is an integer greater than or equal to 1, and Y is a constant.

With reference to the ninth aspect, in some implementations of the ninth aspect, the first value of the feature satisfies the following relationship: $Z=X^{M4-N}+Y$, or $Z=X^{M4-N}$, where Z represents the first value of the feature, N represents a non-negative integer corresponding to the feature, X is an integer greater than or equal to 1, Y is a constant, and M4 is related to a quantity of the plurality of features.

For beneficial effects of the apparatus in the ninth aspect and the possible designs of the ninth aspect, refer to the beneficial effects in the fourth aspect and the possible designs of the fourth aspect.

According to a tenth aspect, a communication apparatus is provided. The apparatus is configured to perform the method provided in the fifth aspect.

The apparatus includes: a receiving unit, configured to receive third indication information from a network device, where the third indication information indicates a first value of a feature in priorities of a plurality of features; and a processing unit, configured to determine a second value of a feature combination based on the first value of the feature, where the second value of the feature combination is for selecting a random access resource, and a first value of a third feature and a first value in a fourth-feature set satisfy the following relationship: The first value of the third feature is greater than a sum of the first value in the fourth-feature set, where the third feature is one of the plurality of features, and the fourth-feature set is a set of all features that are in the plurality of features and whose first values are less than the first value of the third feature.

With reference to the tenth aspect, in some implementations of the tenth aspect, the first value of the feature satisfies the following relationship: $Z=X^N+Y$, or $Z=X^N$, where Z represents the first value of the feature, N represents a non-negative integer corresponding to the feature, X is an integer greater than or equal to 1, and Y is a constant.

With reference to the tenth aspect, in some implementations of the tenth aspect, the first value of the feature satisfies the following relationship: $Z=X^{M4-N}+Y$, or $Z=X^{M4-N}$, where Z represents the first value of the feature, N represents a non-negative integer corresponding to the feature, X is an integer greater than or equal to 1, Y is a constant, and M4 is related to a quantity of the plurality of features.

With reference to the tenth aspect, in some implementations of the tenth aspect, the second value of the feature combination is a sum of a first value of at least one feature included in the feature combination.

With reference to the tenth aspect, in some implementations of the tenth aspect, the processing unit is further configured to select a random access resource for a first feature combination, where a second value of the first feature combination is largest among a plurality of second values of a plurality of feature combinations, and a feature included in one of the plurality of feature combinations is one or more of features in a feature combination for triggering a random access process.

For beneficial effects of the apparatus in the tenth aspect and the possible designs of the tenth aspect, refer to the beneficial effects in the fifth aspect and the possible designs of the fifth aspect.

According to an eleventh aspect, a communication apparatus is provided. The apparatus is configured to perform the method provided in the first aspect, the third aspect, or the fifth aspect. Specifically, the communication apparatus may include units and/or modules, for example, a processing unit and an obtaining unit, configured to perform the method provided in any implementation of the first aspect, the third aspect, or the fifth aspect.

In an implementation, a transceiver unit may be a transceiver or an input/output interface. The processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to a twelfth aspect, a communication apparatus is provided. The apparatus is configured to perform the method provided in the second aspect or the fourth aspect. Specifically, the communication apparatus may include units and/or modules, for example, a processing unit and an obtaining unit, configured to perform the method provided in the second aspect or the fourth aspect.

In an implementation, a transceiver unit may be a transceiver or an input/output interface. The processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to a thirteenth aspect, this application provides a processor, configured to perform the methods provided in the foregoing aspects.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a fourteenth aspect, a computer-readable storage medium is provided. The computer-readable storage medium stores program code to be executed by a device. The program code is for performing the method provided in any one of the implementations of the first aspect to the fifth aspect.

According to a fifteenth aspect, a computer program product including instructions is provided. When the computer program product runs on a computer, the computer is enabled to perform the method provided in any one of the implementations of the first aspect to the fifth aspect.

According to a sixteenth aspect, a chip is provided. The chip includes a processor and a communication interface. The processor reads, through the communication interface, instructions stored in a memory, to perform the method provided in any one of the implementations of the first aspect to the fifth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the implementations of the first aspect to the fifth aspect.

According to a seventeenth aspect, a communication system is provided, including the communication apparatus according to the sixth aspect, including the communication apparatus according to the seventh aspect and the communication apparatus according to the eighth aspect, or including the communication apparatus according to the ninth aspect and the communication apparatus according to the tenth aspect.

According to an eighteenth aspect, a communication method is provided. The method may be performed by a terminal device, or may be performed by a component (for example, a chip or a circuit) of the terminal device. This is not limited. For ease of description, an example in which the method is performed by the terminal device is used below for description.

The communication method includes: The terminal device receives a handover command or a reconfiguration-with-synchronization parameter from a network device, where the handover command or the reconfiguration-with-synchronization parameter includes fifth indication information, and the fifth indication information indicates a feature priority of a target cell. The terminal device selects a random access resource based on the feature priority of the target cell.

According to the foregoing technical solution, the terminal device that performs handover from a source cell to the target cell may learn of the feature priority of the target cell based on the indication information in the handover command or the reconfiguration-with-synchronization parameter, to perform contention-based random access based on the feature priority of the target cell. In this way, a network may not need to include a SIB1 of the target cell in an RRC reconfiguration message that includes the handover command or the reconfiguration-with-synchronization parameter, to reduce a size of the RRC reconfiguration message during the handover, and reduce a possibility of a message sending failure. Moreover, the terminal device does not need to read, before the handover or before completing a RACH procedure, the SIB1 of the target cell or the SIB1 included in the RRC reconfiguration message, to reduce a handover delay.

With reference to the eighteenth aspect, in some implementations of the eighteenth aspect, before the terminal device receives the handover command or the reconfiguration-with-synchronization parameter from the network device, the method further includes: The terminal device receives a first SIB from the network device, where the first SIB includes sixth indication information, and the sixth indication information indicates a feature priority of a source cell. The terminal device selects a random access resource based on the feature priority of the source cell, where the first SIB is a SIB corresponding to the source cell.

With reference to the eighteenth aspect, in some implementations of the eighteenth aspect, the handover command or the reconfiguration-with-synchronization parameter is included in an RRC reconfiguration message.

With reference to the eighteenth aspect, in some implementations of the eighteenth aspect, the RRC reconfiguration message includes a second SIB, the second SIB includes a feature priority parameter of the target cell, and the second SIB is a SIB corresponding to the target cell.

With reference to the eighteenth aspect, in some implementations of the eighteenth aspect, the fifth indication information indicates feature priorities of a RedCap and CovEnh.

According to a nineteenth aspect, a communication method is provided. The method may be performed by a network device, or may be performed by a component (for example, a chip or a circuit) of the network device. This is not limited. For ease of description, an example in which the method is performed by the network device is used below for description.

The communication method includes: The network device determines a feature priority of a target cell. The network device sends a handover command or a reconfiguration-with-synchronization parameter to a terminal device, where the handover command or the reconfiguration-with-synchronization parameter includes fifth indication information, and the fifth indication information indicates the feature priority of the target cell.

With reference to the nineteenth aspect, in some implementations of the nineteenth aspect, before the network device sends the handover command or the reconfiguration-with-synchronization parameter to the terminal device, the method further includes: The network device sends a first SIB to the terminal device, where the first SIB includes sixth indication information, the sixth indication information indicates a feature priority of a source cell, and the first SIB is a SIB corresponding to the source cell.

With reference to the nineteenth aspect, in some implementations of the nineteenth aspect, an RRC reconfiguration message includes a second SIB, the second SIB includes a feature priority parameter of the target cell, and the second SIB is a SIB corresponding to the target cell.

With reference to the nineteenth aspect, in some implementations of the nineteenth aspect, the fifth indication information indicates feature priorities of a RedCap and CovEnh.

For beneficial effects of the method in the nineteenth aspect and the possible designs of the nineteenth aspect, refer to the beneficial effects in the eighteenth aspect and the possible designs of the eighteenth aspect.

According to a twentieth aspect, a communication apparatus is provided. The apparatus is configured to perform the method provided in the eighteenth aspect.

The apparatus includes: a receiving unit, configured to receive a handover command or a reconfiguration-with-synchronization parameter from a network device, where the handover command or the reconfiguration-with-synchronization parameter includes fifth indication information, and the fifth indication information indicates a feature priority of a target cell; and a processing unit, configured to select a random access resource based on the feature priority of the target cell.

With reference to the twentieth aspect, in some implementations of the twentieth aspect, before the receiving unit receives the handover command or the reconfiguration-with-synchronization parameter from the network device, the receiving unit is further configured to receive a first SIB from the network device, where the first SIB includes sixth indication information, and the sixth indication information indicates a feature priority of a source cell. The processing unit is further configured to select a random access resource based on the feature priority of the source cell, where the first SIB is a SIB corresponding to the source cell.

With reference to the twentieth aspect, in some implementations of the twentieth aspect, an RRC reconfiguration message includes a second SIB, the second SIB includes a feature priority parameter of the target cell, and the second SIB is a SIB corresponding to the target cell.

With reference to the twentieth aspect, in some implementations of the twentieth aspect, the fifth indication information indicates feature priorities of a RedCap and CovEnh.

For beneficial effects of the method in the twentieth aspect and the possible designs of the twentieth aspect, refer to the beneficial effects in the eighteenth aspect and the possible designs of the eighteenth aspect.

According to a twenty-first aspect, a communication apparatus is provided. The apparatus is configured to perform the method provided in the nineteenth aspect.

The apparatus includes: a processing unit, configured to determine to configure a feature priority of a target cell; and a sending unit, configured to send a handover command or a reconfiguration-with-synchronization parameter to a terminal device, where the handover command or the reconfiguration-with-synchronization parameter includes fifth indication information, and the fifth indication information indicates the feature priority of the target cell.

With reference to the twenty-first aspect, in some implementations of the twenty-first aspect, before the sending unit sends the handover command or the reconfiguration-with-synchronization parameter to the terminal device, the sending unit is further configured to send a first SIB to the terminal device, where the first SIB includes sixth indication information, the sixth indication information indicates a feature priority of a source cell, and the first SIB is a SIB corresponding to the source cell.

With reference to the twenty-first aspect, in some implementations of the twenty-first aspect, an RRC reconfiguration message includes a second SIB, the second SIB includes a feature priority parameter of the target cell, and the second SIB is a SIB corresponding to the target cell.

With reference to the twenty-first aspect, in some implementations of the twenty-first aspect, the fifth indication information indicates feature priorities of a RedCap and CovEnh.

For beneficial effects of the method in the twenty-first aspect and the possible designs of the twenty-first aspect, refer to the beneficial effects in the nineteenth aspect and the possible designs of the nineteenth aspect.

According to a twenty-second aspect, a communication apparatus is provided. The apparatus is configured to perform the method provided in the eighteenth aspect. Specifically, the communication apparatus may include units and/or modules, for example, a processing unit and an obtaining unit, configured to perform the method provided in any one of the implementations of the eighteenth aspect.

In an implementation, a transceiver unit may be a transceiver or an input/output interface. The processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to a twenty-third aspect, a communication apparatus is provided. The apparatus is configured to perform the method provided in the nineteenth aspect. Specifically, the communication apparatus may include units and/or modules, for example, a processing unit and an obtaining unit, configured to perform the method provided in the nineteenth aspect.

In an implementation, a transceiver unit may be a transceiver or an input/output interface. The processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to a twenty-fourth aspect, this application provides a processor, configured to perform the methods provided in the eighteenth aspect and the nineteenth aspect.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a twenty-fifth aspect, a computer-readable storage medium is provided. The computer-readable storage medium stores program code to be executed by a device. The program code is for performing the method provided in any one of the implementations of the eighteenth aspect and the nineteenth aspect.

According to a twenty-sixth aspect, a computer program product including instructions is provided. When the computer program product runs on a computer, the computer is enabled to perform the method provided in any one of the implementations of the eighteenth aspect and the nineteenth aspect.

According to a twenty-seventh aspect, a chip is provided. The chip includes a processor and a communication interface. The processor reads, through the communication interface, instructions stored in a memory, to perform the method provided in any one of the implementations of the eighteenth aspect and the nineteenth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the implementations of the eighteenth aspect and the nineteenth aspect.

According to a twenty-eighth aspect, a communication system is provided, including the communication apparatus according to the twentieth aspect and the communication apparatus according to the twenty-first aspect.

**BRIEF DESCRIPTION OF DRAWINGS**

FIG. 1 is a diagram of a communication system 100 to which an embodiment of this application is applicable;
(a) to (d) in FIG. 2 are diagrams of a mode of communication between a network device and a terminal device;
FIG. 3 is a schematic flowchart of a four-step random access process;
FIG. 4 is a schematic flowchart of a two-step random access process;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a block diagram of a communication apparatus according to an embodiment of this application; and
FIG. 10 is another block diagram of a communication apparatus according to an embodiment of this application.

**DESCRIPTION OF EMBODIMENTS**

The following describes technical solutions in embodiments in this application with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet-of-things (internet-of-things, IoT) communication system, or another communication system.

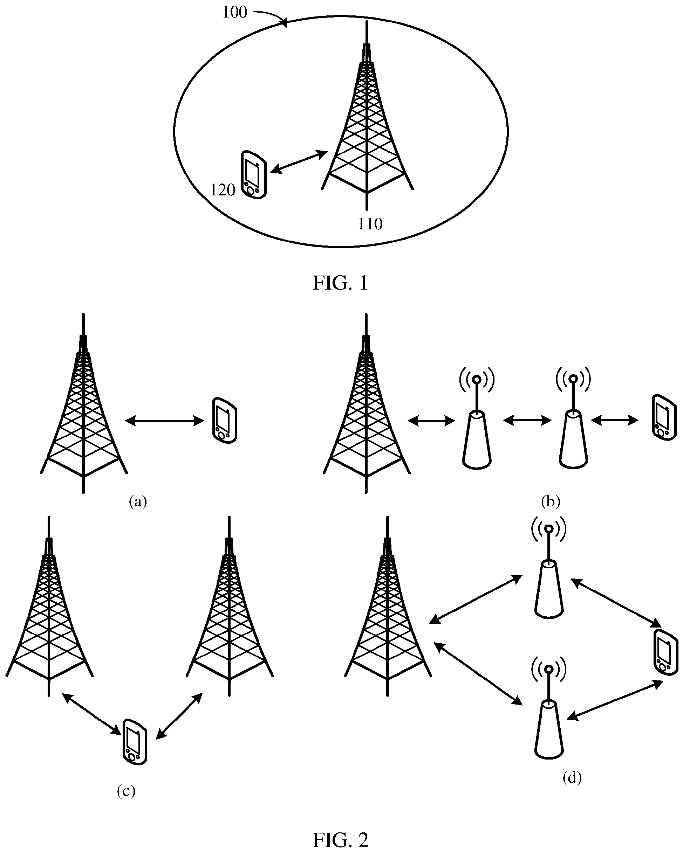

For ease of understanding embodiments of this application, a communication system shown in FIG. 1 is first used as an example to describe in detail the communication system to which embodiments of this application are applicable. FIG. 1 is a diagram of a communication system 100 to which an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for the communication devices such as the network device 110 and the terminal device 120. For each communication device in the communication system 100, the configured plurality of antennas may include at least one transmit antenna for sending a signal and at least one receive antenna for receiving a signal. Therefore, the communication devices, for example, the network device 110 and the terminal device 120, in the communication system 100 may communicate with each other by using a multi-antenna technology.

By way of example but not limitation, the network device and the terminal device in the scenario shown in FIG. 1 may communicate in a plurality of modes. For example, the network device communicates with the terminal device in a point-to-point transmission mode or a multi-hop (in other words, relay (relay)) transmission mode. A plurality of network devices communicate with the terminal device in a dual-connectivity (dual-connectivity, DC) or multi-connectivity transmission mode. (a) to (d) in FIG. 2 are diagrams of a mode of communication between the network device and the terminal device.

(a) in FIG. 2 shows point-to-point transmission between the network device and the terminal device, (b) in FIG. 2 shows multi-hop single-connectivity transmission between the network device and the terminal device, (c) in FIG. 2 shows dual-connectivity transmission between the network device and the terminal device, (d) in FIG. 2 shows multi-hop multi-connectivity transmission between the network device and the terminal device.

It should be noted that FIG. 2 is merely an example, and constitutes no limitation on the protection scope of this application. The mode of communication between the network device and the terminal device is not limited in embodiments of this application. For example, transmission between the network device and the terminal device may be on an uplink, a downlink, an access link, a backhaul (backhaul) link, or a sidelink (Sidelink).

The terminal device (terminal device) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example but not limitation, in embodiments of this application, the wearable device may also be referred to as a wearable intelligent device, and is a general name of a wearable device developed by intelligently designing daily wear by using a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. An IoT is an important part of future information technology development. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrowband (narrowband, NB) technology.

The network device in embodiments of this application may be any device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system, for example, an NR system, may be one antenna panel or a group of antenna panels (including a plurality of antenna panels) of a gNB in the 5G system, or may be a network node, for example, a baseband unit (BBU) or a distributed unit (distributed unit, DU), included in a gNB or a transmission point.

In some deployment, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may serve as a network device in an access network (radio access network, RAN) through division, or may serve as a network device in a core network (core network, CN) through division. This is not limited in this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a Windows operating system, that implement service processing through a process (process). The application layer includes applications such as a browser, an address book, word processing software, and instant messaging software. In addition, a specific structure of an execution body performing a method provided in embodiments of this application is not particularly limited in embodiments of this application, provided that a program recording code of the method provided in embodiments of this application can be run to perform communication according to the method provided in embodiments of this application. For example, the execution body performing the method provided in embodiments of this application may be the terminal device or the network device, or may be a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel and various other media that can store, include, and/or carry instructions and/or data.

It should be understood that FIG. 1 and FIG. 2 use the communication between the network device and the terminal device as an example to briefly describe a communication scenario to which this application can be applied, and do not impose a limitation on another scenario to which this application can be applied.

It should be further understood that FIG. 1 and FIG. 2 are merely simplified diagrams of examples for ease of understanding. The communication system may further include another network device or another terminal device that is not shown in FIG. 1 and FIG. 2.

For example, the communication system may further include a core network device configured to manage configurations of the terminal device and the network device, for example, including an access and mobility management function (access and mobility management function, AMF) network element, a session management function (session management function, SMF) network element, a user plane function (user plane function, UPF) network element, and a policy control function (policy control function, PCF) network element.

FIG. 1 and FIG. 2 show the communication system to which embodiments of this application are applicable. To facilitate understanding of the technical solutions in embodiments of this application, before the solutions in embodiments of this application are described based on a 5G architecture, some terms or concepts in 5G that may be used in embodiments of this application are first briefly described.

1. Random access process

The random access process is a process starting from sending, by a terminal device, a random access preamble (preamble) to attempt to access a network and ending before a basic signaling connection is established to the network.

It should be noted that before the terminal device selects a random access channel occasion (RACH occasion, RO) for sending the preamble, the terminal device needs to select an uplink carrier. For example, when a supplementary uplink (supplementary uplink, SUL) or a normal uplink (normal uplink, NUL) is configured, the terminal device may choose to operate on the SUL or the NUL.

After selecting the uplink carrier, the terminal device (for example, the terminal device in an RRC connected state) may need to perform a bandwidth part (Bandwidth part, BWP) operation. For example, when no RO is configured on an active uplink BWP for the terminal device, the terminal device needs to switch the active uplink BWP to an initial uplink BWP.

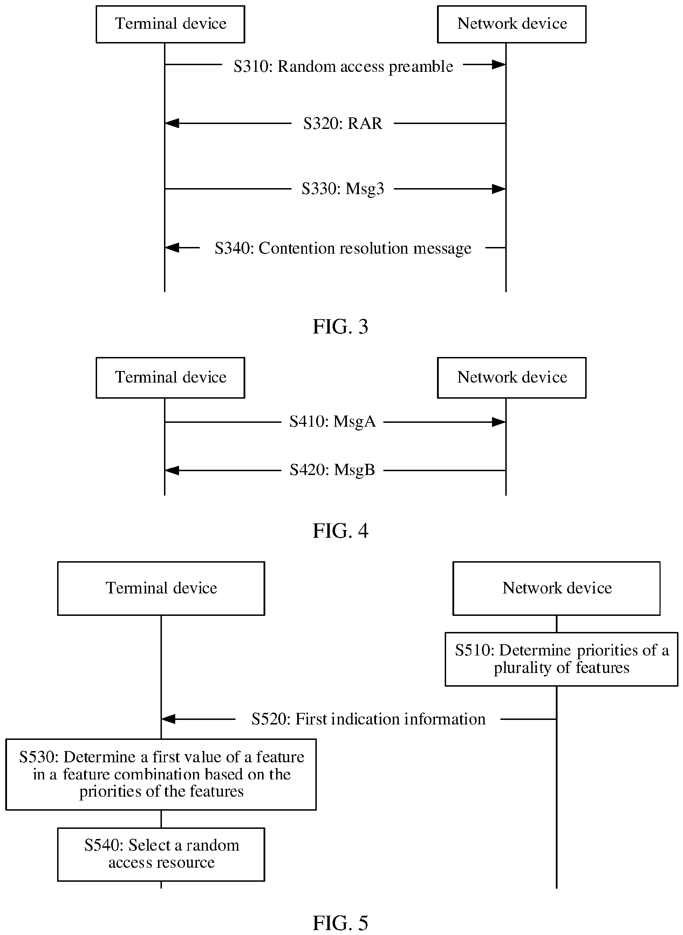

After selecting the uplink carrier or performing the BWP operation, the terminal device needs to select a random access (random access, RA) type. This may be understood as: The terminal device needs to choose to perform two-step random access (FIG. 4 shows the two-step random access) or four-step random access (FIG. 3 shows the four-step random access).

Further, after determining the RA type, the terminal device needs to select a RACH resource. The terminal device may select, based on a selected synchronization signal and PBCH block (Synchronization Signal and PBCH block, SSB) and a mapping relationship between an SSB and an RO, the RO for sending the preamble. Alternatively, the terminal device may select the to-be-sent preamble based on a selected SSB and a mapping relationship between an SSB and a preamble.

For example, one SSB may correspond to a plurality of ROs, or a plurality of SSBs are mapped to one RO. For another example, one SSB corresponds to one or more preambles, and different SSBs may use different preambles.

Currently, random access is mainly classified into two types: the four-step random access and the two-step random access. For ease of understanding, a four-step random access process and a two-step random access process are separately described with reference to FIG. 3 and FIG. 4.

FIG. 3 is a schematic flowchart of the four-step random access process.

It can be learned from FIG. 3 that the four-step random access process may include the following step.

S310: The terminal device sends the random access preamble to the network device.

For example, the terminal device sends the random access preamble to the network device on a physical random access channel (physical random access channel, PRACH) resource, where the PRACH resource may be understood as the random access channel occasion (RACH occasion, RO).

After receiving the random access preamble sent by the terminal device, the network device sends a random access response (random access response, RAR) to the terminal device based on the random access preamble. The random access process shown in FIG. 3 further includes the following step.

S320: The network device sends the RAR to the terminal device.

For example, the RAR sent by the network device to the terminal device includes indication information indicating an uplink resource for sending a message 3 (message 3, Msg3). This may be understood as: After receiving the RAR, the terminal device can learn of the uplink resource for sending the Msg3.

After receiving the RAR, the terminal device sends the Msg3 based on the RAR. The random access process shown in FIG. 3 further includes the following step.

S330: The terminal device sends the Msg3 to the network device.

For example, the Msg3 may include layer 2 (layer 2, L2) information and/or layer 3 (layer 3, L3) information, for example, an RRC connection establishment request message or a beam failure recovery (beam failure recovery, BFR) MAC control element (control element, CE).

When the terminal device succeeds in contention resolution, the network device sends a contention resolution message to the terminal device. The random access process shown in FIG. 3 further includes the following step.

S340: The network device sends the contention resolution message to the terminal device.

For example, the contention resolution message includes an identifier (identifier, ID) of the terminal device, and the contention resolution message may also be referred to as a message 4 (message 4, Msg4). When it is determined based on the Msg3 that the random access is contention-based random access, information about terminal devices needing to participate in contention is stored. When the contention is resolved by using the Msg4, the contention resolution is performed on these terminal devices participating in the contention.

It should be noted that FIG. 3 in this application is merely a diagram provided for ease of describing the four-step random access process, and does not constitute any limitation on the protection scope of this application. For specific descriptions of the four-step random access process, refer to descriptions in a current related technology.

FIG. 4 is a schematic flowchart of the two-step random access process.

It can be learned from FIG. 4 that the two-step random access process may include the following step.

S410: The terminal device sends a message A (message A, MsgA) to the network device.

The MsgA includes a preamble part and a physical uplink shared channel (physical uplink shared channel, PUSCH) part. The preamble part is sent on a PRACH resource (for example, the foregoing RO), and a PUSCH resource may carry L2 or L3 information, for example, a BFR MAC CE or an RRC connection establishment request message.

After receiving the message A sent by the terminal device, the network device sends a RAR to the terminal device based on the message A. The random access process shown in FIG. 4 further includes the following step.

S420: The network device sends a message B (message B, MsgB) to the terminal device.

The MsgB may include a success RAR (success RAR) or a fallback RAR (fallback RAR).

When the terminal device receives the fallback RAR, the terminal device needs to fall back to a four-step random access process, to be specific, send a Msg3.

In addition to the foregoing fallback process from the two-step random access to the four-step random access, if the network device chooses to perform the two-step random access process when triggering the random access, after a quantity of times of sending the preamble in the two-step random access process reaches a maximum quantity of sending times, the terminal device may further fall back (fallback) to the four-step random access process to attempt access, to increase an access success rate of the terminal device and ensure access performance of the terminal device.

2. PRACH resource partition

It can be learned from the foregoing descriptions of the random access process that the random access preamble needs to be sent on the PRACH resource for the random access. Currently, it is specified in a protocol that PRACH resource partition needs to be performed for a terminal device with the following features. The four-step random access is used as an example:

(1) Reduced capability (Reduced Capability, RedCap)

RedCap UE is a terminal device with a reduced capability. The reduced capability may be a reduction in a maximum bandwidth supported by the terminal device, a reduction in a quantity of antennas of the terminal device, or the like. Because the maximum bandwidth (for example, 20 MHz) supported by the RedCap UE is less than that supported by a conventional terminal device (or referred to as a non-RedCap terminal device), during the random access process, the network device needs to pre-identify the RedCap UE in a Msgl, so that the network device can perform special processing on the RedCap UE in a subsequent RACH process.

For example, an uplink resource that is for a Msg3 and that is scheduled in a RAR does not exceed the maximum bandwidth supported by the RedCap UE, and the RedCap UE is appropriately configured in a Msg4.

Alternatively, the network device may not configure pre-identification on a Msg1 of the RedCap, but identify the RedCap UE by using a Msg3.

For example, when a bandwidth that is of an initial uplink BWP and that is configured by the network device does not exceed 20 MHz, the network device may identify the RedCap UE by using the Msg3.

It should be noted that the RedCap should be understood as a terminal device type. For unified descriptions with the following three features, "feature" is also used in the following descriptions, in other words, the RedCap may be understood as a feature supported by the terminal device.

(2) Small data transmission (small data transmission, SDT)

A terminal device in an RRC inactive (RRC_INACTIVE) state may perform RACH-based small data transmission. This may be understood as: The terminal device also sends small data when sending a Msg3, and can perform small data transmission without entering a connected state, to reduce power consumption and a delay.

Therefore, the terminal device may report, in a Msgl, that the terminal device requests the small data transmission, so that the network device may schedule, in a RAR, a large Msg3 transmission resource for the terminal device to carry the small data.

(3) Coverage Enhancement (coverage enhancement, CovEnh)

How to improve coverage performance of a Msg3 through repeated transmission is studied in the CovEnh. Therefore, the terminal device may report, in a Msgl, that the coverage enhancement needs to be performed, so that the network device may schedule repetition (repetition) of the Msg3.

(4) RAN network slicing enhancement (RAN slicing)

In the RAN network slicing enhancement, considering that priorities of some services or users are high, the network device may provide dedicated RACH resources for the services or users, to indicate a high priority of a slice to a network, to implement RACH resource isolation.

In addition, one slice group may include one or more slices. The network device may configure an independent dedicated PRACH resource for the slice group, or a plurality of slice groups may share an independent dedicated PRACH resource.

For the foregoing four features, the network device needs to identify a feature of a terminal device in a Msg1 (or MsgA) process of a RACH process. Therefore, the network device needs to configure an independent PRACH resource for the feature. The independent PRACH resource may include an independent RO (for example, an independent time-frequency domain resource RO) or a dedicated preamble.

For example, the network device may configure an independent RO resource for the RedCap UE. The network device receives a preamble on the resource, and may identify that a terminal device that sends the preamble is the RedCap UE, to perform special processing on the terminal device in a subsequent process.

The network device also needs to configure a dedicated RACH resource for a feature combination (feature combination) of the foregoing four features.

For example, if the RedCap UE triggers RACH-based small data transmission, the network device needs to identify, in the Msgl, that the terminal device is the RedCap UE, to perform special processing on the RedCap UE in the subsequent RACH process. In addition, the network device needs to identify, in the Msgl, that the terminal device requests the SDT, to consider the transmission of the small data when configuring the Msg3 resource. In this case, the network device needs to configure an independent RACH resource for a scenario in which the RedCap UE triggers the RACH-based small data transmission, where the RACH resource may be represented as a resource corresponding to a feature combination of the RedCap + the SDT (or represented as the RedCap and the SDT).

Feature combinations of the foregoing four features are as follows:

the SDT + the RedCap (or represented as the RedCap and the SDT);
the RedCap + the CovEnh (or represented as the RedCap and the CovEnh);
the CovEnh + the slicing (or represented as the CovEnh and the slicing);
the SDT + the slicing (or represented as the SDT and the slicing);
the SDT + the CovEnh (or represented as the SDT and the CovEnh);

the RedCap + the slicing (or represented as the RedCap and the slicing);

the SDT + the RedCap + the CovEnh (or represented as the SDT and the RedCap and the CovEnh);

the SDT + the RedCap + the slicing (or represented as the SDT and the RedCap and the slicing);

the SDT + the CovEnh + the slicing (or represented as the SDT and the CovEnh and the slicing);

the RedCap + the CovEnh + the slicing (or represented as the RedCap and the CovEnh and the slicing); and

the SDT + the RedCap + the CovEnh + the slicing (or represented as the SDT and the RedCap and the CovEnh and the slicing).

It should be noted that a specific name of the feature combination is not limited in this application, provided that the feature combination includes a plurality of features. Whether a relationship between the features in the feature combination is represented by "+", "and", another connection symbol, or no connection symbol is not limited. For example, the SDT + the RedCap may be directly represented as the SDT, the RedCap.

Therefore, the network device may need to configure an independent RACH resource not only for the foregoing four features but also for the foregoing feature combination.

In addition, a combination of the two-step random access and the foregoing feature or feature combination needs to be considered.

For example, the network device may need to configure an independent two-step random access resource for the RedCap UE.

For another example, the network device may need to configure an independent two-step random access resource for RedCap UE that executes a service of a slice group 1.

3. RACH resource selection

In configuration performed by the network device, the network device may configure a dedicated RACH resource for all the features or feature combinations (for example, the foregoing four features, the feature combinations of the four features, or the combination of the feature or the feature combination and the two-step random access), or may configure a dedicated RACH resource only for a part of features or feature combinations. The dedicated RACH resource for the feature or the feature combination may be referred to as RACH partition (RACH partition).

For example, a feature combination for triggering the RACH process is the RedCap + the CovEnh + the slicing, but the network device does not configure a dedicated RACH resource for the feature combination of the RedCap + the CovEnh + the slicing, and only configures a dedicated RACH resource for the features or feature combinations including the RedCap + the slicing and the RedCap + the CovEnh. In this case, the terminal device may select a dedicated RACH resource for a specific feature or feature combination based on a feature priority (or referred to as a feature priority sequence, a feature sequence, a feature priority criterion, or the like) of the terminal device in a RACH resource selection process. The feature priority herein may also be understood as a feature sequence of the terminal device in the RACH resource selection process, and does not necessarily represent importance of services corresponding to different features.

The feature combination for triggering the RACH process may be understood as meeting a condition of a related feature in the feature combination in a RACH startup process. For example, the terminal device is the RedCap UE, a signal quality threshold measured by the terminal device meets a condition of the coverage enhancement, and a service arriving at the terminal device is related to a slice group. In this case, the feature combination for triggering the RACH process may be the RedCap + the CovEnh + the slicing. For another example, an RRC layer indicates to a MAC layer that the RedCap feature, the SDT feature, or the coverage enhancement feature is applicable to the RACH process.

The feature priority may further affect a RACH fallback (fallback) process in addition to the RACH resource selection process.

For example, the feature combination for triggering the RACH process is the RedCap + the CovEnh + the slicing, and the network device configures a dedicated RACH resource for the feature combination of the RedCap + the CovEnh + the slicing. However, if the RACH process of the terminal device based on the resource fails (for one or more times), the terminal device may fall back to a RACH process on another resource. In this case, whether a dedicated resource for a feature combination of the RedCap + the slicing or a feature combination of the RedCap + the CovEnh is selected for the RACH process depends on a feature priority in a RACH fallback mechanism.

With reference to FIG. 1 and FIG. 2, the foregoing briefly describes the scenario to which this application is applicable, and describes the basic concepts in this application. It can be learned from the foregoing that the feature priority needs to be considered for the RACH resource selection.

For example, the feature priority may be configured by the network device. For example, the network device configures priorities of the features (for example, the RedCap or the SDT) in a system information block (System Information Block, SIB) 1. A smaller value of the priority indicates a higher priority of the feature.

For example, a format of the SIB1 is enumerated as follows:

```
SIB1-v17xy-IEs ::=                SEQUENCE {
    featurePriorities-r17   SEQUENCE {
            redCapPriority-r17      FeaturePriority-r17      OPTIONAL,
            slicingPriority-r17     FeaturePriority-r17      OPTIONAL,
            ce-Priority-r17         FeaturePriority-r17      OPTIONAL,
            sdt-Priority-r17        FeaturePriority-r17      OPTIONAL,

            ...

    }          OPTIONAL, -- Need R
        nonCriticalExtension            SEQUENCE { }
OPTIONAL

    }
    FeaturePriority-r17 ::=        INTEGER (0..15)
```

The field "FeaturePriority-r17" indicates a feature priority in discussion of a feature priority in 3GPP Rel-17. The field "redCapPriority-r17" indicates a priority of the RedCap. The field "slicingPriority-r17" indicates a priority of the RAN slicing. The field "ce-Priority-r17" indicates a priority of the CovEnh. The field "sdt-Priority-r17" indicates a priority of the SDT. Specifically, priorities of different features may be identified by integers (0..15), and a smaller value indicates a higher priority of the feature.

A RACH resource selection method is: selecting a RACH resource based on a feature priority. For example, when a network does not configure a dedicated resource for a feature combination for triggering a RACH, UE may select the RACH resource from a RACH resource that corresponds to a subset of the feature combination and that is configured by the network, where the "subset" may be understood as a set of feature combinations including a part of features in the feature combination for triggering the RACH. A process of the RACH resource selection method includes:

If one RACH resource in the RACH resources configured by the network is applicable to all features in the feature combination for triggering the RACH, the UE selects the RACH resource; if one or more RACH resources are applicable to a subset of all features in the feature combination for triggering the RACH, the UE selects the RACH resource based on a feature priority sequence configured in a SIB1. Specifically, the selection of the RACH resource by the UE includes:

(a) identifying, from the available RACH resources, a RACH resource available to a feature with a highest feature priority in the feature combination for triggering the RACH;
(b) if only one RACH resource is identified, selecting the resource;
(c) if a plurality of RACH resources are identified, repeating steps (a) and (b), where during the repetition, inputs are the identified RACH resource and another feature (other than the considered feature) in the feature combination for triggering the RACH; and
(d) otherwise (if no resource is identified), repeating steps (a), (b) and (c), where during the repetition, inputs are a previously identified RACH resource and another feature (other than the considered feature) in the feature combination for triggering the RACH.

For ease of understanding, the following describes the RACH resource selection method with reference to a specific example 1.

Example 1:

There are four features (F1, F2, F3, and F4) in total, feature priorities configured by the network device are F1>F2>F3>F4, the feature combination for triggering the RACH is F1+F2+F3+F4, and features/feature combinations for which the network device configures a RACH resource include: {F1+F3+F4, F1+F3, F2+F3+F4, F1, F1+F4}.

First, the UE determines that the network does not configure a dedicated RACH resource for F1+F2+F3+F4. Therefore, the UE selects a RACH resource from subsets of the feature combination F1+F2+F3+F4, based on a feature priority sequence (F1>F2>F3>F4).

Resources configured with the feature F1 are identified from RACH resources that correspond to the subsets of the feature combination and that are configured by the network, where the resources include RACH resources for {F1+F3+F4, F1+F3, F1, F1+F4}.

A RACH resource configured with the feature F2 (a feature with a highest priority other than F1 in the feature combination for triggering the RACH) is identified from the identified plurality of RACH resources, and a result is null.

A RACH resource configured with the feature F3 (a feature with a highest priority other than F1 and F2 in the feature combination for triggering the RACH) is further identified from the plurality of RACH resources that are previously identified, where the RACH resource includes {F1+F3+F4, F1+F3}.

A RACH resource configured with the feature F4 (a feature with a highest priority other than F1, F2, and F3 in the feature combination for triggering the RACH) is further identified from the identified plurality of RACH resources, where the RACH resource includes {F1+F3+F4}.

Because only one RACH resource is identified, the RACH resource is selected, and the RACH resource selection process ends.

In the RACH resource selection method, the UE needs to select the RACH resource based on the feature priority sequence. The selection process is complex in logic and has high implementation complexity. Consequently, a long delay of the RACH process may be introduced.

Another RACH resource selection method is: directly adding priorities of features to obtain a priority of a feature combination, where UE selects a RACH resource based on the priority of the feature combination.

For ease of understanding, the following describes the RACH resource selection method with reference to a specific example 2.

Example 2:

A network configures a priority of a feature F1 as 8, configures a priority of a feature F2 as 7, configures a priority of a feature F3 as 4, and configures a priority of a feature F4 as 2.

Feature combinations for which a network device configures a RACH resource and priorities of the feature combinations are enumerated in the following table:

| Feature combination | F3+F4 | F2+F3 | F2+F3+F4 | F1 | F4 |
|---|---|---|---|---|---|
| Priority of the feature combination | 4+2=6 | 7+4=11 | 7+4+2=13 | 8 | 2 |

In the RACH resource selection method, the UE may select a RACH resource configured for a feature combination with a highest feature combination priority, for example, select the feature combination {F2+F3+F4}.

In the RACH resource selection method, if the UE selects a feature combination with a highest priority that is calculated, there is a case: The network device configures a RACH resource related to F1 with a highest priority, but the UE selects another RACH resource (for example, the RACH resource for the feature combination F2+F3+F4).

If the UE initiates a RACH process by using the RACH resource for the feature combination F2+F3+F4, although the feature F1 has the highest priority, the network device cannot identify that the UE is to perform the feature F1 (if the feature F1 is the RedCap UE, the network cannot identify that the UE is the RedCap UE). This may affect access performance of the UE.

To avoid the problems in the current RACH resource selection methods, this application provides a communication method, to reduce complexity of a process in which UE selects a RACH resource based on a feature priority.

A specific structure of an execution body performing the method provided in embodiments of this application is not particularly limited in the following embodiments, provided that a program recording code of the method provided in embodiments of this application can be run to perform communication according to the method provided in embodiments of this application. For example, the execution body performing the method provided in embodiments of this application may be a terminal device or an access network device, or may be a functional module that can invoke and execute the program in the terminal device or the access network device.

For ease of understanding of embodiments of this application, the following descriptions are provided.

First, in this application, "indicate" may be understood as "enable", and "enable" may include "directly enable" and "indirectly enable". When a piece of information is described as enabling A, the information may directly enable A or indirectly enable A, but it does not mean that the information definitely carries A.

Information enabled by the information is referred to as to-be-enabled information. In a specific implementation process, the to-be-enabled information may be enabled in many manners. The manners include but are not limited to: For example, the to-be-enabled information such as the to-be-enabled information or an index of the to-be-enabled information may be directly enabled. Alternatively, the to-be-enabled information may be indirectly enabled by enabling other information, where there is an association relationship between the other information and the to-be-enabled information. Alternatively, only a part of the to-be-enabled information may be enabled, and the other part of the to-be-enabled information is known or agreed in advance. For example, specific information may be enabled based on a pre-agreed (for example, specified in a protocol) sequence of all information, to reduce enabling overheads to some extent. In addition, a common part of all information may be identified and enabled in a unified manner, to reduce enabling overheads caused by enabling same information separately.

Second, "first", "second", and the like (for example, "#1" or "#2") in this application are merely for ease of description, and for distinguishing objects, but are not intended to limit the scope of embodiments of this application. For example, the terms are for distinguishing different indication information, but are not for describing a particular order or sequence. It should be understood that the objects described in such a way are interchangeable in an appropriate circumstance, so that a solution other than embodiments of this application can be described.

Third, in this application, "preset" may include "predefinition", for example, predefinition in a protocol. The "predefinition" may be implemented by pre-storing corresponding code or a corresponding table in a device (for example, the terminal device and the network device); or implemented in another manner of indicating related information. A specific implementation of the "predefinition" is not limited in this application.

Fourth, "storage" in embodiments of this application may mean storage in one or more memories. The one or more memories may be separately disposed, or may be integrated into an encoder or a decoder, a processor, or a communication apparatus. Alternatively, a part of the one or more memories may be separately disposed, and the other part of the one or more memories are integrated into a decoder, a processor, or a communication apparatus. A type of the memory may be a storage medium in any form. This is not limited in this application.

Fifth, "protocols" in embodiments of this application may be standard protocols in the communication field, for example, may include a 5G protocol, a new radio (new radio, NR) protocol, and a related protocol for a future communication system. This is not limited in this application.

Without loss of generality, interaction between the network device and the terminal device is used as an example below to describe in detail the communication method provided in embodiments of this application.

FIG. 5 is a schematic flowchart of a communication method according to an embodiment of this application. The method includes the following step.

S510: A network device determines priorities of a plurality of features.

Different features in the plurality of features meet at least one of the following: Different features correspond to different service requirements, different features correspond to different transmission modes, different features correspond to different device types, different features correspond to different application scenarios, or different features correspond to different functions.

For example, different features in the plurality of features may be understood as any two features in the plurality of features.

For example, that different features correspond to different service requirements may be understood as: Different features correspond to different performance requirements. For example, different features have different performance requirements on one or more of a transmission delay, reliability, a service priority, and the like. Alternatively, different features correspond to different services (such as a video, a call, and a cloud game). Optionally, the service requirement may alternatively be quality of service (Quality of service, QoS).

For example, that different features correspond to different transmission modes may be understood as: Different features correspond to different transmission modes such as multicast, broadcast, or unicast.

For example, that different features correspond to different device types may be understood as: Different features correspond to different device types such as RedCap UE and an internet-of-things terminal.

For example, that different features correspond to different application scenarios may be understood as: Different features may be applied to different scenarios such as an industrial internet of things, a wearable device, a smartphone, and satellite communication.

For example, that different features correspond to different functions may be understood as: Different features are for different functions such as improving coverage of a terminal device, reducing power consumption of the terminal device, reducing costs of the terminal device, and improving user experience.

Alternatively, the plurality of features include multiple features in reduced capability device type, small data transmission, coverage enhancement, or access network slicing enhancement.

Specifically, the plurality of features include the RedCap, the SDT, the CovEnh, the RAN slicing, and the like in the PRACH resource partition described in the foregoing basic concepts.

The plurality of features may be multiple features in the RedCap, the SDT, the CovEnh, and the RAN slicing.

For example, the plurality of features are the RedCap, the SDT, the CovEnh, and the RAN slicing.

For another example, the plurality of features are the RedCap, the SDT, and the CovEnh.

For still another example, the plurality of features are the RedCap, the SDT, and the RAN slicing.

For still another example, the plurality of features are the RedCap and the SDT.

In addition, feature priorities of different slicing groups may also be configured to be different.

For example, a sequence of feature priorities is: the RedCap > a RAN slicing group 2 > the CovEnh > a RAN slicing group 1 > the SDT.

Alternatively, the network device may configure a dedicated random access resource for a feature. Dedicated random access resources for different features may be different. The random access resource includes a time domain resource, a frequency domain resource, or a preamble sequence resource.

It should be noted that in embodiments of this application, types and quantities of specific features included in the plurality of features are not limited. In addition, a specific form of the feature is not limited in this application, and may be one or more of several features (for example, the reduced capability device type, the small data transmission, the coverage enhancement, or the access network slicing enhancement) that are currently discussed, or may be one or more of other features introduced in a future communication method.

In a possible implementation, the network device may configure priorities of different features based on deployment and a policy of the network device.

For example, based on the deployment and the policy of the network device, the network device supports a reduced capability terminal device, the small data transmission, the coverage enhancement, and the network slicing enhancement, and a priority sequence of the reduced capability, the small data transmission, the coverage enhancement, and the network slicing enhancement is: the reduced capability > the small data transmission > the coverage enhancement > the network slicing enhancement. The network device determines that a priority sequence of the plurality of features is: the reduced capability > the small data transmission > the coverage enhancement > the network slicing enhancement.

In another possible implementation, the network device may determine priorities of different features based on historical communication information.

For example, the historical communication information indicates that the network device supports the reduced capability, the small data transmission, the coverage enhancement, and the network slicing enhancement, and a priority sequence of the reduced capability, the small data transmission, the coverage enhancement, and the network slicing enhancement is: the reduced capability > the small data transmission > the coverage enhancement > the network slicing enhancement. The network device determines that a priority sequence of the plurality of features is: the reduced capability > the small data transmission > the coverage enhancement > the network slicing enhancement.

In still another possible implementation, the network device may determine priorities of different features based on an indication of a management device.

For example, the management device indicates that the network device supports the reduced capability, the small data transmission, the coverage enhancement, and the network slicing enhancement, and a priority sequence of the reduced capability, the small data transmission, the coverage enhancement, and the network slicing enhancement is: the reduced capability > the small data transmission > the coverage enhancement > the network slicing enhancement. The network device determines that a priority sequence of the plurality of features is: the reduced capability > the small data transmission > the coverage enhancement > the network slicing enhancement.

It should be noted that a specific implementation in which the network device determines the priority sequence of the plurality of features is not limited in embodiments of this application.

Further, the network device may update the priority sequence of the plurality of features based on a real-time policy and real-time deployment, to improve flexibility of determining the priority sequence of the plurality of features, and improve access performance of the terminal device.

For example, when another feature (for example, a feature other than the foregoing four features) is introduced subsequently, the network device may further add a priority of the feature.

For example, a feature #1 is introduced, and a priority of the feature #1 is higher than that of the RedCap. A current priority sequence of the plurality of features is the RedCap > the RAN slicing > the CovEnh > the SDT. The network device may not need to update the current priority sequence of the four features, but indicate the newly introduced feature as a feature with a highest priority to the terminal device. Therefore, this method for configuring the priority sequence has better backward compatibility.

For example, the network device may configure a priority of only a part of the features. For example, it is specified in a protocol that the RedCap has a highest priority, and the slicing has a second highest priority. The network device configures feature priorities of the SDT and the CovEnh as the CovEnh > the SDT.

Specifically, after determining the priority sequence of the plurality of features, the network device may configure the priority sequence of the plurality of features for the terminal device by using first indication information. The method shown in FIG. 5 further includes the following step.

S520: The network device sends the first indication information to the terminal device. In other words, the terminal device receives the first indication information from the network device.

The first indication information indicates the priorities that are of the plurality of features and that are determined by the network device. Optionally, that the first indication information indicates the priorities of the plurality of features may be: Each of a plurality of pieces of information indicates a priority of one feature, and the plurality of pieces of information that indicate the priorities of the plurality of features are collectively referred to as the first indication information.

For example, that the first indication information indicates the priorities of the plurality of features may be explicitly indicating the sequence of the plurality of features. For example, feature identification information of the plurality of features indicates the sequence of the plurality of features. For ease of understanding, the following provides descriptions by using an example in which the plurality of features include the RedCap, the RAN slicing, the CovEnh, and the SDT.

For example, the first indication information includes the identification information of the plurality of features, and a sequence of the identification information of the plurality of features indicates that the sequence of the plurality of features is the RedCap, the RAN slicing, the CovEnh, and the SDT. In this case, the priority sequence of the plurality of features is the RedCap > the RAN slicing > the CovEnh > the SDT.

Specifically, a specific feature may be indicated by indicating an identifier of the feature. For example, a feature is identified by four bits. An identifier of the RedCap is 0000, an identifier of the RAN slicing is 0001, an identifier of the SDT is 0011, and an identifier of the CovEnh is 0010. In this case, the first indication information includes a sequence indication field 0000000100100011 for the plurality of features. The identifier of the feature is predetermined in a protocol or negotiated by the terminal device and the network device in advance.

For example, that the first indication information indicates the priorities of the plurality of features may be implicitly indicating the sequence of the plurality of features. For example, dedicated configuration information of the plurality of features indicates the sequence of the plurality of features. For ease of understanding, the following provides descriptions by using an example in which the plurality of features include the RedCap, the RAN slicing, the CovEnh, and the SDT.

For example, the network device separately configures dedicated resources or dedicated configurations for the features. In this case, a sequence of the dedicated resources or the dedicated configurations for the features is the RedCap, the RAN slicing, the CovEnh, and the SDT, and the priority sequence of the plurality of features is the RedCap > the RAN slicing > the CovEnh > the SDT, where the first indication information may be understood as an occurrence sequence of the features.

For example, that the first indication information indicates priority information of the plurality of features may be indicating priority values of the features. For ease of understanding, the following provides descriptions by using an example in which the plurality of features include the RedCap, the RAN slicing, the CovEnh, and the SDT.

For example, the network device configures absolute priorities for the features, to determine the priority sequence of the features. The network device configures an absolute feature priority of the RedCap as 0, an absolute feature priority of the SDT as 3, an absolute feature priority of the RAN slicing as 6, and an absolute feature priority of the CovEnh as 10.

Optionally, a smaller value indicates a higher priority. In this case, the feature priority sequence is the RedCap > the RAN slicing > the SDT > the CovEnh.

Optionally, a larger value indicates a higher priority. In this case, the feature priority sequence is the CovEnh > the SDT > the RAN slicing > the RedCap.

For ease of description, the following provides descriptions by using the example in which the first indication information indicates the priority values of the features. For example, the network device configures the absolute feature priority of the RedCap as 0, the absolute feature priority of the SDT as 3, the absolute feature priority of the RAN slicing as 6, and the absolute feature priority of the CovEnh as 10.

It should be noted that the foregoing solutions in which the first indication information indicates the priorities of the plurality of features are merely examples for describing a case in which the priorities of the plurality of features may be indicated in different manners, and do not constitute any limitation on the protection scope of this application. Other indication information that can indicate the priorities of the plurality of features also falls within the protection scope of this application. Details are not described herein.

In this embodiment of this application, the priorities that are of the plurality of features and that are determined by the network device may be for a terminal device served by the network device, or may be for a specific terminal device. For example, there are the following two possibilities of a manner of sending the foregoing first indication information:

Possibility 1:

The first indication information is included in system information. Step S520 may be understood as: The network device sends the system information to the terminal device, where the system information includes the first indication information.

In the possibility 1, the network device may broadcast priorities of a plurality of features in the system information. The network device can configure, in a broadcast manner, the priorities of the plurality of features for a plurality of served terminal devices, to improve configuration efficiency.

Possibility 2:

The first indication information is included in dedicated signaling. Step S520 may be understood as: The network device sends the dedicated signaling to the terminal device, where the dedicated signaling includes the first indication information.

In the possibility 2, the network device configures priorities of a plurality of features by using the dedicated signaling. The network device can configure the priorities of the plurality of features for a specific terminal device. Optionally, the dedicated signaling may be RRC signaling.

For example, when the terminal device enters a connected state, the network device may configure the priorities of the plurality of features by using an RRC reconfiguration message.

For example, when the terminal device is to leave the connected state, the network device may configure the priorities of the plurality of features by using an RRC release message.

For example, the priorities that are of the plurality of features and that are configured in the RRC release message may include a priority of a feature of a serving cell and/or a priority of a feature of a neighboring cell. The serving cell may be understood as a cell that sends the RRC release message to the terminal device.

In a possible implementation, the priorities (for example, a priority #1) that are of the plurality of features and that are indicated by the first indication information included in the system information are different from the priorities (for example, a priority #2) that are of the plurality of features and that are indicated by the first indication information included in the dedicated signaling, where both the priority #1 and the priority #2 belong to the priorities of the plurality of features.

Further, in this embodiment, after receiving the first indication information, the terminal device may determine a first value of a feature in a feature combination based on the priorities of the features. A procedure for the method shown in FIG. 5 further includes the following step.

S530: The terminal device determines the first value of the feature in the feature combination based on the priorities of the features.

Optionally, in this embodiment, the first value of the feature may be understood as a value related to the priority value that is of the feature and that is obtained by the terminal device.

The feature combination includes at least one feature, and the at least one feature belongs to the plurality of features configured by the network device.

For example, the network device configures four features (for example, the RedCap, the RAN slicing, the CovEnh, and the SDT), and the feature included in the feature combination is one or more of the four features.

Further, the feature included in the feature combination is one or more of features included in a feature combination for triggering a RACH process.

For example, the network device configures four features (for example, the RedCap, the RAN slicing, the CovEnh, and the SDT), the feature combination for triggering the RACH process by the terminal device is the RedCap + the SDT + the CovEnh, and the network device configures a dedicated resource for a feature combination of the SDT + the RAN slicing, a feature combination of the RedCap + the SDT, and a feature combination of the RedCap + the CovEnh. In this case, the terminal device may determine first values of the features (for example, a first value #1 of the RedCap, a first value #2 of the SDT, and a first value #3 of the CovEnh) in the feature combination of the RedCap + the SDT and the feature combination of the RedCap + the CovEnh.

It should be understood that the terminal device may determine a first value of a feature in a specific feature combination in a plurality of feature combinations. For ease of description, in this application, an example in which a first value of a feature in a specific feature combination is determined is used for description.

In a possible implementation, the terminal device may determine a first value of a feature in the plurality of features.

For example, the network device configures priorities of four features (for example, the RedCap, the RAN slicing, the CovEnh, and the SDT), and the terminal device may determine a first value of each feature (for example, a first value #1 of the RedCap, a first value #2 of the RAN slicing, a first value #3 of the CovEnh, and a first value #4 of the SDT) in the four features. In this embodiment, the determining a first value of a feature in the plurality of features may be understood as: determining a plurality of first values respectively corresponding to the plurality of features, in other words, determining a plurality of first values of the plurality of features, or determining a first value of a feature in the plurality of features.

The following mainly provides descriptions by using an example in which the terminal device determines the first value of the feature in the feature combination based on the priority of the feature. The feature combination includes the at least one feature. In an implementation in which the terminal device determines the first value of the feature in the plurality of features, the following description about determining a first value of each of the at least one feature may be understood as determining the first value of each of the plurality of features. Specifically, a manner of determining the first value of each of the plurality of features is similar to that of determining the first value of each of the at least one feature. Details about determining the first value of the feature in the plurality of features by the terminal device are not described below.

Specifically, the first value is for determining a second value of the feature combination, and the second value of the feature combination is for selecting a random access resource. The second value of the feature combination is related to the first values of all the features included in the feature combination.

Because the first value that is of the feature and that is determined by the terminal device is for determining the second value of the feature combination, step S530 may be understood as: The terminal device determines the second value of the feature combination.

Specifically, in this embodiment, a specific implementation in which the terminal device determines the first value of the feature based on the priority of the feature is not limited, provided that the first value of each of the at least one feature in the feature combination satisfies the following rule (referred to as a first rule below):

A first value of a first feature is greater than a sum of a first value in a set of second features, where the first feature is one of the at least one feature, and the set of second features is a set of all features that are in the at least one feature and whose priorities are lower than a priority of the first feature. Alternatively, the set of second features may be understood as a set of all features that are in the at least one feature and whose first values are less than the first value of the first feature.

For example, a feature combination #1 includes a feature #1, a feature #2, and a feature #3, and a feature priority sequence is: the feature #1 > the feature #2 > the feature #3. A first value #1 of the feature #1 is greater than a sum of a first value #2 of the feature #2 and a first value #3 of the feature #3. The first value #2 of the feature #2 is greater than the first value #3 of the feature #3.

Alternatively, the first value of each of the plurality of features configured by the network device satisfies the following rule:

A first value of a first feature is greater than a sum of a first value in a set of second features, where the first feature is one of the plurality of features, and the set of second features is a set of all features that are in the plurality of features and whose priorities (or first values) are lower than a priority of the first feature.

For example, a network configures feature priorities of a feature #1, a feature #2, and a feature #3, and a feature priority sequence is: the feature #1 > the feature #2 > the feature #3. A first value #1 of the feature #1 is greater than a sum of a first value #2 of the feature #2 and a first value #3 of the feature #3. The first value #2 of the feature #2 is greater than the first value #3 of the feature #3.

It should be understood that, in this application, a purpose of determining the first value of the feature is to enable the terminal device to select, if the network device configures a RACH resource related to a feature with a high priority, the resource in a RACH resource selection process. In other words, a specific manner of determining the first value of the feature is not limited, provided that the second value that is of the feature combination and that is determined by using the first value of the feature in the feature combination can enable the terminal device to select the RACH resource related to the feature with the high priority in the RACH resource selection process.

For ease of understanding, the following describes a manner of determining the first value of the feature, so that the first value of the first feature is greater than the sum of the first value in the set of second features. Specifically, the manner of determining the first value of the feature includes the following steps.

Step 1: The terminal device determines, based on a priority of the at least one feature in the feature combination, a non-negative integer corresponding to the at least one feature.

Specifically, the priority of the at least one feature and the non-negative integer corresponding to the at least one feature satisfy the following relationship:

A higher priority of a feature indicates a larger non-negative integer corresponding to the feature, or a higher priority of a feature indicates a smaller non-negative integer corresponding to the feature.

For example, the features included in the feature combination are the RedCap, the RAN slicing, and the CovEnh, and the first indication information indicates that a priority sequence of the RedCap, the RAN slicing, and the CovEnh is the RedCap > the RAN slicing > the CovEnh. In this case, the features included in the feature combination may be mapped to non-negative integers in ascending order of the priorities: The RedCap corresponds to a non-negative integer #1, the RAN slicing corresponds to a non-negative integer #2, and the CovEnh corresponds to a non-negative integer #3, where the non-negative integer #1 is greater than the non-negative integer #2, and the non-negative integer #2 is greater than the non-negative integer #3.

Alternatively, the features included in the feature combination may be mapped to non-negative integers in descending order of the priorities: The RedCap corresponds to a non-negative integer #3, the RAN slicing corresponds to a non-negative integer #2, and the CovEnh corresponds to a non-negative integer #1, where the non-negative integer #1 is greater than the non-negative integer #2, and the non-negative integer #2 is greater than the non-negative integer #3.

For example, the non-negative integer corresponding to the at least one feature is M2 consecutive positive integers from 0 to M2-1, and M2 is a quantity of the at least one feature.

For example, the non-negative integer #1 is 2, the non-negative integer #2 is 1, and the non-negative integer #3 is 0.

Step 2: The terminal device determines the first value of the feature based on the non-negative integer corresponding to the feature.

When the features included in the feature combination may be mapped to the non-negative integers in ascending order of the priorities, the non-negative integer corresponding to the feature and the first value of the feature satisfy the following relationship:

$$Z=X^N+Y, \text{ or } Z=X^N$$

Z represents the first value of the feature, N represents the non-negative integer to which the feature is mapped, X is an integer greater than or equal to 1, and Y is a constant.

For example, X=2, and $Z=2^N$.

When the features included in the feature combination may be mapped to the non-negative integers in descending order of the priorities, the non-negative integer corresponding to the feature and the first value of the feature satisfy the following relationship:

$$Z=X^{M1-N}+Y, \text{ or } Z=X^{M1-N}$$

Z represents the first value of the feature, N represents the non-negative integer to which the feature is mapped, X is an integer greater than or equal to 1, Y is a constant, and M1 is related to a quantity of the at least one feature or is related to a quantity of the plurality of features.

For example, X=2, and $Z=2^{M1-N}$,

For example, that M1 is related to a quantity of the at least one feature includes but is not limited to:
M1 is the quantity of the at least one feature included in the feature combination (in this case, M1=M2), M1 is the quantity of the at least one feature included in the feature combination plus a constant, M1 is the quantity of the at least one feature included in the feature combination minus a constant, or M1 is an arithmetic average value of the quantity of the at least one feature included in the feature combination and a constant.

For example, that M1 is related to a quantity of the plurality of features includes but is not limited to:
M1 is the quantity of the plurality of features (in this case, M1=M3), M1 is the quantity of the plurality of features plus a constant, M1 is the quantity of the plurality of features minus a constant, or M1 is an arithmetic average value of the quantity of the plurality of features and a constant.

It should be understood that the foregoing relationship between the first value of the feature and the non-negative integer corresponding to the feature is merely an example, and does not constitute any limitation on the protection scope of this application. Another first value of the feature that can be calculated based on the non-negative integer corresponding to the feature also falls within the protection scope of this application, provided that the first value of the feature satisfies the first rule.

Further, the second value of the feature combination is related to the first values of all the features included in the feature combination.

For example, a feature combination #1 includes a feature #1, a feature #2, and a feature #3, and a second value of the feature combination #1 is related to a first value #1 of the feature #1, a first value #2 of the feature #2, and a first value #3 of the feature #3.

For example, the second value of the feature combination #1 is a sum of the first value #1 of the feature #1, the first value #2 of the feature #2, and the first value #3 of the feature #3.

For another example, the second value of the feature combination #1, the first value #1 of the feature #1, the first value #2 of the feature #2, and the first value #3 of the feature #3 satisfy the following relationship:
Second value of the feature combination $\#1=X^{\text{First value }\#1+\text{First value }\#2+\text{First value }\#3}$, or Second value of the feature combination $\#1=X^{\text{First value }\#1}+X^{\text{First value }\#2}+X^{\text{First value }\#3}$. X is an integer greater than or equal to 1.

It should be noted that a relationship between the second value of the feature combination and the sum of the first values of all the features included in the feature combination is not limited in this embodiment, provided that the second value of the feature combination and the sum of the first values of all the features included in the feature combination satisfy a proportional relationship. In other words, a larger sum of the first values of all the features included in the feature combination indicates a larger second value of the feature combination.

Further, after determining the second value of the feature combination, the terminal device may select the random access resource based on the second value of the feature combination. The procedure for the method shown in FIG. 5 further includes the following step.

S540: The terminal device selects the random access resource.

Specifically, the terminal device selects a random access resource for a first feature combination, where a second value of the first feature combination is largest among a plurality of second values of a plurality of feature combinations, and a feature included in one of the plurality of feature combinations is one or more of features in the feature combination for triggering the random access process.

For example, if the features included in the feature combination for triggering the random access process are the RedCap + the SDT + the CovEnh, and the network device configures the dedicated resource for the feature combination of the SDT + the RAN slicing, the feature combination of the RedCap + the SDT, and the feature combination of the RedCap + the CovEnh. In this case, the terminal device determines to select a feature combination from the feature combination of the RedCap + the SDT and the feature combination of the RedCap + the CovEnh. If the first value of the CovEnh is greater than the first value of the SDT, a second value of the RedCap + the CovEnh is greater than a second value of the RedCap + the SDT, and the terminal device selects a random access resource for the RedCap + the CovEnh.

For example, the foregoing feature combination of the RedCap + the SDT and feature combination of the RedCap + the CovEnh may be understood as subsets of all feature combinations for triggering the RACH process or subsets of a feature combination applicable to the current RACH process.

For ease of understanding, with reference to a specific example 3, the following describes the communication method shown in FIG. 5. The example 3 includes the following steps.

Step 1: The terminal device receives priorities that are of a plurality of features and that are configured by the network device.

For example, feature priorities indicated in a received SIB1 are:

| Feature | F1 | F2 | F3 | F4 |
|---|---|---|---|---|
| Feature priority | 0 | 3 | 6 | 10 |

A smaller priority value indicates a higher priority of a feature. Therefore, a feature priority sequence is F1>F2>F3>F4. Specifically, the SIB1 may be understood as the foregoing first indication information.

Step 2: The terminal device determines a second value of a feature combination based on the received feature priorities.

For example, the terminal device maps, to 0 to 3 in ascending order of the priorities, the feature priorities configured by the network device, where 3 may be understood as a value obtained by subtracting 1 from a quantity of features.

Further, the terminal device may determine, based on a non-negative integer to which a feature is mapped, that a first value of the feature is $X^N$, where X is an integer greater than or equal to 1. For example, in the following table, X=2.

| Feature | F1 | F2 | F3 | F4 |
|---|---|---|---|---|
| Feature priority | 0 | 3 | 6 | 10 |
| N | 3 | 2 | 1 | 0 |
| First value | $2^3=8$ | $2^2=4$ | $2^1=2$ | $2^0=1$ |

In the foregoing table, a value of N may be understood as the non-negative integer corresponding to the feature.

For example, as described in the foregoing example 1, the feature combination for triggering the RACH is F1+F2+F3+F4, and the features/feature combinations for which the network device configures the RACH resource include: {F1+F3+F4, F1+F3, F2+F3+F4, F1, F1+F4}. First values of the features included in the feature combination are summed to obtain a second value of the feature combination, where the second value of the feature combination may indicate a priority of the feature combination, as enumerated in the following table:

| Feature combination | F1+F3+F4 | F1+F3 | F2+F3+F4 | F1 | F1+F4 |
|---|---|---|---|---|---|
| Priority of the feature combination | 8+2+1=11 | 8+2=10 | 4+2+1=7 | 8 | 8+1=9 |

Step 3: The terminal device selects a random access resource.

Specifically, the terminal device selects a feature combination with a highest priority, or selects a feature combination with a largest second value. For example, the terminal device selects the RACH resource for F1+F3+F4.

Specifically, compared with the RACH resource selection process described in the example 1, the RACH resource selection process described in the example 3 does not require the terminal device to perform an iteration (or cycle) process of RACH resource selection. Therefore, logic is simple, and implementation complexity is low.

In addition, in comparison with the RACH resource selection process described in the example 2, in the RACH resource selection process described in the example 3, if the network device configures a RACH resource related to a feature with a high priority, the terminal device may select the resource.

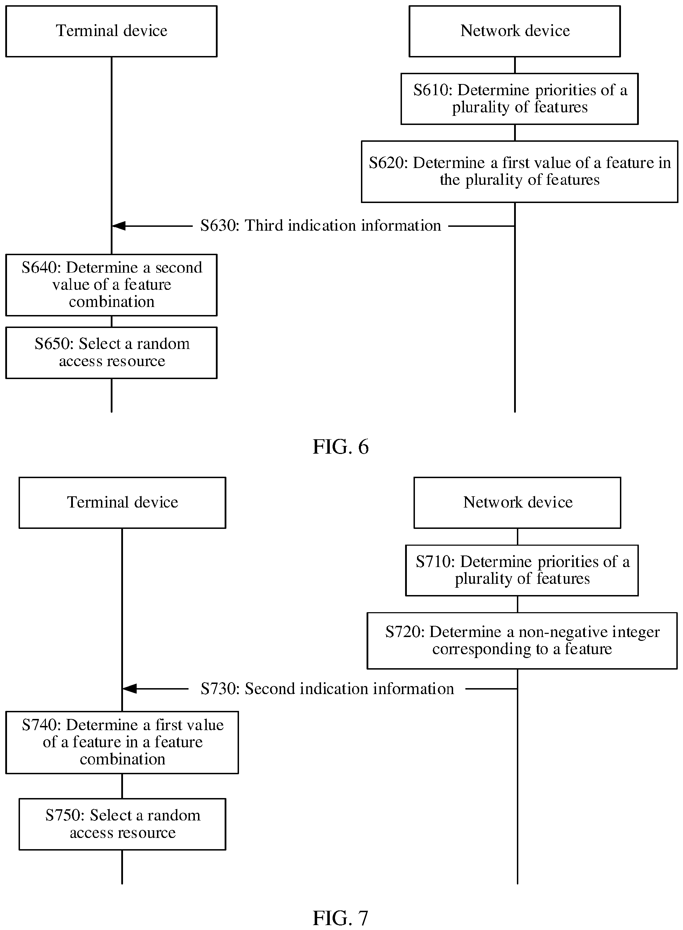

In the communication method shown in FIG. 5, the terminal device determines the first value of the at least one feature in the feature combination, and determines the second value of the feature combination. This application further provides another communication method in which a network device determines a first value of a feature and sends the first value to a terminal device. The following describes the communication method in detail with reference to FIG. 6.

FIG. 6 is a schematic flowchart of another communication method according to an embodiment of this application. The method includes the following step.

S610: A network device determines priorities of a plurality of features.

Refer to the descriptions of S510, and details are not described herein again.

Specifically, in this embodiment, after determining the priorities of the plurality of features, the network device may determine a first value of a feature in the plurality of features based on the priorities of the features. A procedure for the method shown in FIG. 6 further includes the following step.

S620: The network device determines the first value of the feature in the plurality of features.

Optionally, in this embodiment, the first value of the feature may be understood as a priority value that is of the feature and that is configured by the network device.

Specifically, a manner in which the network device determines the first value of the feature in the plurality of features in this embodiment is similar to the manner in which the terminal device determines the first value of the feature in the feature combination in the embodiment shown in FIG. 5.

In this embodiment, a specific implementation in which the network device determines the first value of the feature based on the priority of the feature is not limited, provided that the first value of the feature in the plurality of features satisfies the following rule (referred to as a second rule below):

A first value of a third feature is greater than a sum of a first value in a fourth-feature set, where the third feature is one of the plurality of features, and the fourth-feature set is a set of all features that are in the plurality of features and whose priorities (or first values) are lower than a priority of the third feature.

For example, the plurality of features configured by the network device include a feature #1, a feature #2, a feature #3, and a feature #4, a priority sequence of the four features is the feature #1 > the feature #2 > the feature #3 > the feature #4. A first value #1 of the feature #1 is greater than a sum of a first value #2 of the feature #2, a first value #3 of the feature #3, and a first value #4 of the feature #4, the first value #2 of the feature #2 is greater than a sum of the first value #3 of the feature #3 and the first value #4 of the feature #4, and the first value #3 of the feature #3 is greater than the first value #4 of the feature #4.

For ease of understanding, the following describes a manner of determining the first value of the feature. The manner of determining the first value of the feature includes the following steps.

Step 1: The network device determines, based on the priorities of the plurality of features, non-negative integers corresponding to the plurality of features.

Specifically, the priorities of the plurality of features and the non-negative integers corresponding to the plurality of features satisfy the following relationship:

A higher priority of a feature indicates a larger non-negative integer corresponding to the feature, or a higher priority of a feature indicates a smaller non-negative integer corresponding to the feature.

For example, the plurality of features include a RedCap, RAN slicing, CovEnh, and SDT, and a priority sequence is the RedCap > the RAN slicing > the CovEnh > the SDT. In this case, the plurality of features may be mapped to non-negative integers in ascending order of priorities. The RedCap corresponds to a non-negative integer #1, the RAN slicing corresponds to a non-negative integer #2, the CovEnh corresponds to a non-negative integer #3, and the SDT corresponds to a non-negative integer #4, where the non-negative integer #1 is greater than the non-negative integer #2, the non-negative integer #2 is greater than the non-negative integer #3, and the non-negative integer #3 is greater than the non-negative integer #4.

Alternatively, the plurality of features may be mapped to non-negative integers in descending order of priorities. The RedCap corresponds to a non-negative integer #4, the RAN slicing corresponds to a non-negative integer #3, the CovEnh corresponds to a non-negative integer #2, and the SDT corresponds to a non-negative integer #1, where the non-negative integer #1 is greater than the non-negative integer #2, the non-negative integer #2 is greater than the non-negative integer #3, and the non-negative integer #3 is greater than the non-negative integer #4.

For example, the non-negative integers corresponding to the plurality of features are M3 consecutive positive integers from 0 to M3-1, where M3 is a quantity of the plurality of features.

For example, the non-negative integer #1 is 3, the non-negative integer #2 is 2, the non-negative integer #3 is 1, and the non-negative integer #4 is 0.

Step 2: The network device determines the first value of the feature based on the non-negative integer corresponding to the feature.

When the plurality of features may be mapped to the non-negative integers in ascending order of the priorities, the non-negative integer corresponding to the feature and the first value of the feature satisfy the following relationship:

$$Z=X^{N}+Y, \text{ or } Z=X^{N}$$

Z represents the first value of the feature, N represents the non-negative integer to which the feature is mapped, X is an integer greater than or equal to 1, and Y is a constant.

When the plurality of features may be mapped to the non-negative integers in descending order of the priorities, the non-negative integer corresponding to the feature and the first value of the feature satisfy the following relationship:

$$Z=X^{M4-N}+Y, \text{ or } Z=X^{M4-N}$$

Z represents the first value of the feature, N represents the non-negative integer to which the feature is mapped, X is an integer greater than or equal to 1, Y is a constant, and M4 is related to a quantity of the plurality of features.

For example, that M4 is related to a quantity of the plurality of features includes but is not limited to:

M4 is the quantity of the plurality of features (for example, M4=M3), M4 is the quantity of the plurality of features plus a constant, M4 is the quantity of the plurality of features minus a constant, or M4 is an arithmetic average value of the quantity of the plurality of features and a constant.

It should be understood that the foregoing relationship between the first value of the feature and the non-negative integer corresponding to the feature is merely an example, and does not constitute any limitation on the protection scope of this application. Another first value of the feature that can be calculated based on the non-negative integer corresponding to the feature also falls within the protection scope of this application, provided that the first value of the feature satisfies the second rule.

Further, the network device may send, to a terminal device, third indication information indicating the first value of the feature, so that the terminal device can determine a second value of a feature combination to select a RACH resource. The procedure for the method shown in FIG. 6 further includes the following step.

S630: The network device sends the third indication information to the terminal device. In other words, the terminal device receives the third indication information from the network device.

Specifically, the third indication information indicates the first value of the feature in the plurality of features (for example, each feature in the plurality of features).

In this embodiment of this application, the first value that is of the feature in the plurality of features and that is determined by the network device may be for a terminal device served by the network device, or may be for a specific terminal device. For example, there are the following two possibilities of a manner of sending the foregoing third indication information:

Possibility 1:

The third indication information is included in system information. Step S630 may be understood as: The network device sends the system information to the terminal device, where the system information includes the third indication information.

In the possibility 1, the network device may broadcast the first value of the feature in the plurality of features in the system information. The network device can configure, in a broadcast manner, the first value of the feature in the plurality of features for a plurality of served terminal devices, to improve configuration efficiency.

Possibility 2:

The third indication information is included in dedicated signaling. Step S630 may be understood as: The network device sends the dedicated signaling to the terminal device, where the dedicated signaling includes the third indication information.

In the possibility 2, the network device configures the first value of the feature in the plurality of features by using the dedicated signaling. The network device can configure the first value of the feature in the plurality of features for a specific terminal device.

For example, when the terminal device enters a connected state, the network device may configure the first value of the feature in the plurality of features by using an RRC reconfiguration message.

For example, when the terminal device is to leave the connected state, the network device may configure the first value of the feature in the plurality of features by using an RRC release message.

In this embodiment, after receiving the third indication information, the terminal device may determine the second value of the feature combination based on the first value of the feature. The procedure for the method shown in FIG. 6 further includes the following step.

S640: The terminal device determines the second value of the feature combination.

Specifically, the second value of the feature combination is related to first values of all features included in the feature combination.

For example, a feature combination #1 includes a feature #1, a feature #2, and a feature #3, and a second value of the feature combination #1 is related to a first value #1 of the feature #1, a first value #2 of the feature #2, and a first value #3 of the feature #3.

For example, the second value of the feature combination #1 is a sum of the first value #1 of the feature #1, the first value #2 of the feature #2, and the first value #3 of the feature #3.

For another example, the second value of the feature combination #1, the first value #1 of the feature #1, the first value #2 of the feature #2, and the first value #3 of the feature #3 satisfy the following relationship:

Second value of the feature combination $\#1 = X^{\text{First value }\#1 + \text{First value }\#2 + \text{First value }\#3}$, or Second value of the feature combination $\#1 = X^{\text{First value }\#1} + X^{\text{First value }\#2} + X^{\text{First value }\#3}$. X is an integer greater than or equal to 1.

It should be noted that a relationship between the second value of the feature combination and a sum of the first values of all the features included in the feature combination is not limited in this embodiment, provided that the second value of the feature combination and the sum of the first values of all the features included in the feature combination satisfy a proportional relationship. In other words, a larger sum of the first values of all the features included in the feature combination indicates a larger second value of the feature combination.

Further, after determining the second value of the feature combination, the terminal device may select the random access resource based on the second value of the feature combination. The procedure for the method shown in FIG. 6 further includes the following step.

S650: The terminal device selects the random access resource.

Refer to the descriptions of S540, and details are not described herein again.

For ease of understanding, with reference to a specific example 4, the following describes the communication method shown in FIG. 6. The example 4 includes the following steps.

Step 1: A priority value that is of a feature and that is configured by a network is $X^N$, where X is an integer greater than or equal to 1, to be specific, the priority value that is of the feature and that is configured by the network device is restricted to satisfying the foregoing rule.

For example, a feature priority configured by the network is included in { 1, 2, 4, 8, ..., $2^{Nmax}$}, where Nmax is a non-negative integer corresponding to a feature with a highest priority (in this case, X=2, and Y=0). A larger value of the feature priority indicates a higher priority of the feature.

| Feature | F1 | F2 | F3 | F4 |
|---------|----|----|----|----|
| First value | 8 | 4 | 2 | 1 |

Step 2: The network device sends the priority value of the feature to the terminal device.

For example, the network device indicates, to the terminal device, a feature F1 and a priority value, namely, 8, of F1, a feature F2 and a priority value, namely, 4, of F2, a feature F3 and a priority value, namely, 2, of F3, and a feature F4 and a priority value, namely, 1, of F4.

Step 3: The terminal device determines a second value of a feature combination.

For example, as described in the foregoing example 1, a feature combination for triggering a RACH is F1+F2+F3+F4, and features/feature combinations for which the network device configures a RACH resource include: {F1+F3+F4, F1+F3, F2+F3+F4, F1, F1+F4}. First values of the features included in the feature combination are summed to obtain a second value of the feature combination. The second value of the feature combination may indicate a priority of the feature combination, as enumerated in the following table:

| Feature combination | F1+F3+F4 | F1+F3 | F2+F3+F4 | F1 | F1+F4 |
|---------------------|----------|-------|----------|----|-------|
| Second value of the feature combination | 8+2+1=11 | 8+2=10 | 4+2+1=7 | 8 | 8+1=9 |

Step 4: The terminal device selects a random access resource.

Specifically, the terminal device selects a feature combination with a highest priority. For example, the terminal device selects the RACH resource for F1+F3+F4.

Specifically, compared with the RACH resource selection process described in the example 1, the RACH resource selection process described in the example 4 does not require the terminal device to perform an iteration (or cycle) process of RACH resource selection. Therefore, logic is simple, and implementation complexity is low.

In addition, in comparison with the RACH resource selection process described in the example 2, in the RACH resource selection process described in the example 4, if the network device configures a RACH resource related to a feature with a high priority, the terminal device may select the resource.

In addition, in comparison with the RACH resource selection process described in the example 3, the terminal device may not need to determine the first value of the feature in the RACH resource selection process described in the example 4, to simplify an operation of the terminal device.

In the communication method shown in FIG. 6, the network device sends the first value of the feature to the terminal device. This application further provides another communication method in which a network device determines a non-negative integer corresponding to a feature and sends the non-negative integer to a terminal device. The following describes the communication method in detail with reference to FIG. 7.

FIG. 7 is a schematic flowchart of still another communication method according to an embodiment of this application. The method includes the following step.

S710: A network device determines priorities of a plurality of features.

Refer to the descriptions of S510, and details are not described herein again.

Specifically, in this embodiment, after determining the priorities of the plurality of features, the network device may determine, based on the priorities of the features, a non-negative integer corresponding to a feature in the plurality of features. A procedure for the method shown in FIG. 7 further includes the following step.

S720: The network device determines the non-negative integer corresponding to the feature.

Specifically, the priorities of the plurality of features and the non-negative integers corresponding to the plurality of features satisfy the following relationship:

A higher priority of a feature indicates a larger non-negative integer corresponding to the feature, or a higher priority of a feature indicates a smaller non-negative integer corresponding to the feature.

For example, the plurality of features include a RedCap, RAN slicing, CovEnh, and SDT, and a priority sequence is the RedCap > the RAN slicing > the CovEnh > the SDT. In this case, the plurality of features may be mapped to non-negative integers in ascending order of priorities. The RedCap corresponds to a non-negative integer #1, the RAN slicing corresponds to a non-negative integer #2, the CovEnh corresponds to a non-negative integer #3, and the SDT corresponds to a non-negative integer #4, where the non-negative integer #1 is greater than the non-negative integer #2, the non-negative integer #2 is greater than the non-negative integer #3, and the non-negative integer #3 is greater than the non-negative integer #4.

Alternatively, the plurality of features may be mapped to non-negative integers in descending order of priorities. The RedCap corresponds to a non-negative integer #4, the RAN slicing corresponds to a non-negative integer #3, the CovEnh corresponds to a non-negative integer #2, and the SDT corresponds to a non-negative integer #1, where the non-negative integer #1 is greater than the non-negative integer #2, the non-negative integer #2 is greater than the non-negative integer #3, and the non-negative integer #3 is greater than the non-negative integer #4.

For example, the non-negative integers corresponding to the plurality of features are M3 consecutive positive integers from 0 to M3-1, where M3 is a quantity of the plurality of features.

For example, the non-negative integer #1 is 3, the non-negative integer #2 is 2, the non-negative integer #3 is 1, and the non-negative integer #4 is 0.

Further, the network device may send, to a terminal device, second indication information indicating the non-negative integer corresponding to the feature, so that the terminal device can determine a second value of a feature combination to select a RACH resource. The procedure for the method shown in FIG. 7 further includes the following step.

S730: The network device sends the second indication information to the terminal device. In other words, the terminal device receives the second indication information from the network device.

Specifically, the second indication information indicates the non-negative integer corresponding to the feature in the plurality of features. The non-negative integer corresponding to the feature is for determining a first value of the feature, and the first value of the feature is for selecting the random access resource.

Optionally, the second indication information may further indicate a relationship between a non-negative integer corresponding to a specific feature and a first value of the feature.

Optionally, the non-negative integer corresponding to the feature may be understood as a priority of the feature.

For example, the second indication information indicates that a non-negative integer corresponding to a feature #1 is a non-negative integer #1, and indicates that a first value of the feature #1 is $X^{\text{Non-negative integer \#1}}$.

In this embodiment of this application, the non-negative integer that corresponds to the feature in the plurality of features and that is determined by the network device may be for a terminal device served by the network device, or may be for a specific terminal device. For example, there are the following two possibilities of a manner of sending the foregoing second indication information:

Possibility 1:

The second indication information is included in system information. Step S730 may be understood as: The network device sends the system information to the terminal device, where the system information includes the second indication information.

In the possibility 1, the network device may broadcast, in the system information, the non-negative integer corresponding to the feature in the plurality of features. The network device can configure, in a broadcast manner for a plurality of served terminal devices, the non-negative integer corresponding to the feature in the plurality of features, to improve configuration efficiency.

Possibility 2:

The second indication information is included in dedicated signaling. Step S730 may be understood as: The network device sends the dedicated signaling to the terminal device, where the dedicated signaling includes the second indication information.

In the possibility 2, the network device configures, by using the dedicated signaling, the non-negative integer corresponding to the feature in the plurality of features. The network device can configure, for a specific terminal device, the non-negative integer corresponding to the feature in the plurality of features.

For example, when the terminal device enters a connected state, the network device may configure, by using an RRC reconfiguration message, the non-negative integer corresponding to the feature in the plurality of features.

For example, when the terminal device is to leave the connected state, the network device may configure, by using an RRC release message, the non-negative integer corresponding to the feature in the plurality of features.

In this embodiment, after receiving the second indication information, the terminal device may determine a first value of a feature in the feature combination based on the non-negative integer corresponding to the feature. The procedure for the method shown in FIG. 7 further includes the following step.

S740: The terminal device determines the first value of the feature in the feature combination based on the non-negative integer corresponding to the feature.

Optionally, in this embodiment, the first value of the feature may be understood as a feature priority value.

Specifically, for related descriptions about the determining, by the terminal device, the first value of the feature in the feature combination, refer to the descriptions of step S530 in the embodiment shown in FIG. 5. A difference lies in that the second indication information received by the terminal device does not indicate the priority of the feature, but indicates the non-negative integer corresponding to the feature. To be specific, if the terminal device determines the first value of the feature in the feature combination based on the non-negative integer corresponding to the feature, the terminal device directly uses the received non-negative integer corresponding to the feature (for example, N in the formula for calculating the first value of the feature in step S530 is the non-negative integer delivered by the network device), and does not need to calculate the non-negative integer corresponding to the feature in the feature combination.

Further, after determining the second value of the feature combination, the terminal device may select the random access resource based on the second value of the feature combination. The procedure for the method shown in FIG. 7 further includes the following step.

S750: The terminal device selects the random access resource.

Refer to the descriptions of S540, and details are not described herein again.

For ease of understanding, with reference to a specific example 5, the following describes the communication method shown in FIG. 7. The example 5 includes the following steps.

Step 1: A network configures a non-negative integer corresponding to a feature.

For example, the non-negative integer that corresponds to the feature and that is configured by the network is included in {0..15}, where the integers {0..15} are values defined in a current protocol and indicating feature priorities, and include 16 integers including 0 and values obtained by sequentially increasing, by 1, the former ones starting from 0. As enumerated in the following table:

| Feature | F1 | F2 | F3 | F4 |
|---|---|---|---|---|
| Non-negative integer | 3 | 2 | 1 | 0 |

Step 2: The network device sends, to the terminal device, the non-negative integer corresponding to the feature.

For example, the network device indicates, to the terminal device, the feature F1 and the non-negative integer, namely, 3, corresponding to F1, the feature F2 and the non-negative integer, namely, 2, corresponding to F2, the feature F3 and the non-negative integer, namely, 1, corresponding to F3, and the feature F4 and the non-negative integer, namely, 0, corresponding to F4.

Step 3: The terminal device determines, by using the received non-negative integer corresponding to the feature, a second value that is of a feature combination and that indicates a priority of the feature combination.

For example, the terminal device may determine, based on the non-negative integer corresponding to the feature, that a first value of the feature is $X^N$, where X is an integer greater than or equal to 1. For example, in the following table, X=2.

| Feature | F1 | F2 | F3 | F4 |
|---|---|---|---|---|
| Non-negative integer | 3 | 2 | 1 | 0 |
| First value | $2^3=8$ | $2^2=4$ | $2^1=2$ | $2°=1$ |

For example, as described in the foregoing example 1, a feature combination for triggering a RACH is F1+F2+F3+F4, and features/feature combinations for which the network device configures a RACH resource include: {F1+F3+F4, F1+F3, F2+F3+F4, F1, F1+F4}. First values of the features included in the feature combination are summed to obtain a second value of the feature combination. The second value of the feature combination may indicate a priority of the feature combination, as enumerated in the following table:

| Feature combination | F1+F3+F4 | F1+F3 | F2+F3+F4 | F1 | F1+F4 |
|---|---|---|---|---|---|
| Second value of the feature combination | 8+2+1=11 | 8+2=10 | 4+2+1=7 | 8 | 8+1=9 |

Step 4: The terminal device selects a random access resource. Specifically, the terminal device selects a feature combination with a highest priority. For example, the terminal device selects the RACH resource for F1+F3+F4.

Specifically, compared with the RACH resource selection process described in the example 1, the RACH resource selection process described in the example 5 does not require the terminal device to perform an iteration (or cycle) process of RACH resource selection. Therefore, logic is simple, and implementation complexity is low.

In addition, in comparison with the RACH resource selection process described in the example 2, in the RACH resource selection process described in the example 5, if the network device configures a RACH resource related to a feature with a high priority, the terminal device may select the resource.

In addition, in comparison with the RACH resource selection process described in the example 3, the terminal device may not need to determine the non-negative integer corresponding to the feature in the RACH resource selection process described in the example 5, to simplify an operation of the terminal device.

In addition, in comparison with the RACH resource selection process described in the example 4, the network device may not need to determine the first value of the feature in the RACH resource selection process described in the example 5, to simplify an operation of the network device without greatly increasing implementation complexity of the terminal device.

This application further provides another communication method, to specify configuration performed by a network device on a RACH resource for requesting system information (System information, SI), to simplify an implementation process of RedCap UE.

In a current technology, considering that a maximum bandwidth supported by a RedCap terminal device is narrow (for example, 20 MHz), a network device may configure an independent initial uplink BWP for the RedCap terminal device. The independent initial uplink BWP configured by the network device for the RedCap terminal device may be understood as a BWP configured by the network device other than a common initial uplink BWP.

Further, in the current technology, the network device may configure, for the terminal device, a RACH resource for requesting SI. For example, when the terminal device is in a non-connected state, the terminal device may indicate, to the network device through the foregoing RACH resource configured by the network device, a request for a SIB message that is not broadcast, where the RACH resource is located in the common initial uplink BWP.

When the network device configures the independent initial uplink BWP for the RedCap terminal device, if the network device does not configure, for the RedCap terminal device in the independent initial uplink BWP, the RACH resource for requesting the SI, an RRC layer of the terminal device needs to transfer RACH configurations of two initial uplink BWPs to a MAC layer, and the MAC layer of the terminal device needs to maintain the RACH configurations of the two initial uplink BWPs, namely, a RACH configuration of the common initial uplink BWP and a RACH configuration of the dedicated initial uplink BWP. Therefore, the terminal device needs to consume more memory space, and costs of the terminal device are increased accordingly. To resolve the foregoing problem, the following solution is proposed. The solution includes the following steps.

Step 1: The network device determines a configuration of a first uplink BWP and a configuration of a first RACH resource.

The first uplink BWP is an uplink BWP dedicated to the RedCap terminal device, and the first RACH resource is included in the first uplink BWP.

For example, the first RACH resource is a RACH resource for requesting SI in the first uplink BWP.

Step 2: The network device sends fourth indication information to the terminal device. In other words, the terminal device receives the fourth indication information from the network device.

The fourth indication information includes configuration information for the first uplink BWP and configuration information for the first RACH resource. The configuration information for the first uplink BWP indicates the configuration of the first uplink BWP, and the configuration information for the first RACH resource indicates the configuration of the first RACH resource.

It is specified in the foregoing solution that, if the network device provides the dedicated uplink BWP to the RedCap terminal device, the network device further needs to provide the RACH resource that is in the dedicated uplink BWP and that is for requesting the SI. Further, if the network device provides the configuration of the dedicated uplink BWP to the RedCap terminal device, and the RACH resource for requesting the SI is configured in the common initial uplink BWP, the network device further needs to provide the RACH resource that is in the dedicated uplink BWP of the RedCap terminal device and that is for requesting the SI.

According to the foregoing solution, if the dedicated uplink BWP is provided to the RedCap terminal device, the RACH resource for requesting the SI is definitely provided in the dedicated uplink BWP. Therefore, the terminal device does not need to maintain or use the RACH configuration of the common initial uplink BWP. This reduces the consumption on the memory space, and can further reduce the costs of the terminal device.

In addition, this specification further provides another embodiment. This embodiment relates to obtaining a feature priority of a target cell by a terminal device. The feature priority parameter (featurePriorities) above is generally included in a system information block 1 (System Information Block 1, SIB1). Specifically, for a format of the SIB1, refer to the foregoing descriptions of the format of the SIB1, and details are not described herein again.

The feature priority parameter indicates a priority of a feature. For example, the feature priority parameter indicates a priority of one or more of a RedCap, Slicing, SDT, and coverage enhancement. Specifically, during handover of the terminal device (for example, from a source cell to the target cell), if a network device does not provide a dedicated random access configuration (RACH-ConfigDedicated) in a handover command, the terminal device needs to perform a contention-based random access (contention-based random access, CBRA) process, and the terminal device needs to select a random access resource or a set of random access resources (the set of random access resources) based on the feature priority of the target cell in the contention-based random access process.

For example, the network device may send a SIB1 (for example, dedicatedSIB1-Delivery) for the target cell to the terminal device by using an RRC reconfiguration message. However, the parameter is an optional configuration in the RRC reconfiguration message or in an RRC reconfiguration message including the handover command (or a reconfiguration-with-synchronization parameter, reconfigurationWithSync). It may be understood that the reconfiguration-with-synchronization parameter is a reconfiguration-with-synchronization parameter for the target cell.

It can be learned from the foregoing that during the handover of the terminal device, if the RRC reconfiguration message or the RRC reconfiguration message including the handover command or the reconfiguration-with-synchronization parameter (for example, reconfigurationWithSync) does not include the SIB 1 of the target cell, the terminal device cannot obtain the feature priority of the target cell, and consequently cannot perform contention-based random access. Alternatively, the terminal needs to obtain the SIB1 of the target cell to obtain the feature priority of the target cell. This causes an unnecessary handover delay. Alternatively, even if the RRC reconfiguration message or the RRC reconfiguration message including the handover command (or the reconfiguration-with-synchronization parameter) includes the SIB1 of the target cell during the handover, the terminal device needs to read the SIB1 before the handover or before completing a RACH, to obtain the feature priority of the target cell. This increases a handover delay and affects user experience.

For example, the UE is RedCap UE, and an RSRP measurement value of the UE satisfies an RSRP threshold for performing Msg3 repetition in the coverage enhancement. A random access resource (or a set of random access resources) provided by the target cell to the UE through the source cell includes a random access resource for the RedCap and a random access resource for the CovEnh, but does not include a random access resource for a feature combination of the RedCap + the CovEnh. The RedCap UE initiates the contention-based random access because no dedicated random access resource is available to handover and an application condition of the coverage enhancement is satisfied. This random access process is applicable to the feature combination of the RedCap + the CovEnh. However, considering that a network does not provide the random resource for the feature combination of the RedCap + the CovEnh, the UE should select a random access resource based on a feature priority sequence of the target cell to perform the random access process toward the target cell, for example, select, from the random access resource for the RedCap and the random access resource for the CovEnh, a random access resource corresponding to a feature with a higher feature priority. However, if the handover command or the reconfiguration-with-synchronization parameter does not include the SIB 1 of the target cell, the UE cannot obtain the feature priority sequence of the target cell. Alternatively, if a handover command or a reconfiguration-with-synchronization parameter includes a SIB 1 of the target cell, the UE needs to decode the SIB 1 before starting the random access process to obtain the feature priority of the target cell. This increases a delay of the random access process and increases a handover interruption time period.

A solution that enables the UE to improve handover performance is: In a handover case, the network device forcibly or always includes the SIB1 of the target cell in the handover command or the reconfiguration-with-synchronization parameter. This may be understood as: The SIB1 of the target cell included in the handover command or the reconfiguration-with-synchronization parameter is not optional but mandatory. For example, if the handover command or the reconfiguration-with-synchronization parameter does not include a dedicated random access configuration, the network device forcibly or always includes the SIB1 of the target cell in an RRC reconfiguration message. It may be understood that the RRC reconfiguration message is an RRC reconfiguration message that includes the handover command or the reconfiguration-with-synchronization parameter. If the network device does not include the SIB1 of the target cell in the RRC reconfiguration message when the foregoing condition is satisfied, the terminal device triggers an RRC re-establishment process, or the terminal device selects a random access resource based on a predefined feature priority or a predefined rule.

For example, the predefined feature priority may be the RedCap > the CovEnh.

For example, the predefined rule includes one or more of the following: If the UE is the RedCap UE, the UE selects the random access resource applicable to the RedCap. If the UE is non-RedCap UE and satisfies the coverage enhancement threshold, the UE selects the random access resource applicable to the CovEnh. If the UE is non-RedCap UE and does not satisfy the coverage enhancement threshold, the UE selects a random access resource that is not related to any feature.

In the foregoing solution, a network behavior is restricted, to ensure that the terminal can obtain a valid feature priority. In this solution, a behavior of the terminal performed when the valid feature priority of the target cell cannot be obtained, for example, when a network configuration is abnormal, is specified, to specify a behavior of selecting the random access resource by the terminal, and align understanding and behaviors of the network device and the terminal device, so that a random access success probability and reliability are improved.

However, considering a size of the SIB1, if the SIB1 is carried in the handover command, a size of the RRC reconfiguration message during the handover is increased, a message sending failure probability is increased, and a handover success probability is decreased. In addition, if the terminal device needs to read the SIB1 before the handover or before completing a RACH, a handover delay is increased.

Therefore, how to further improve performance of performing contention-based random access by the terminal device during the handover becomes a problem to be urgently resolved.

Embodiments of this application further provide a communication method and apparatus, to improve performance of performing contention-based random access by a terminal device during handover.

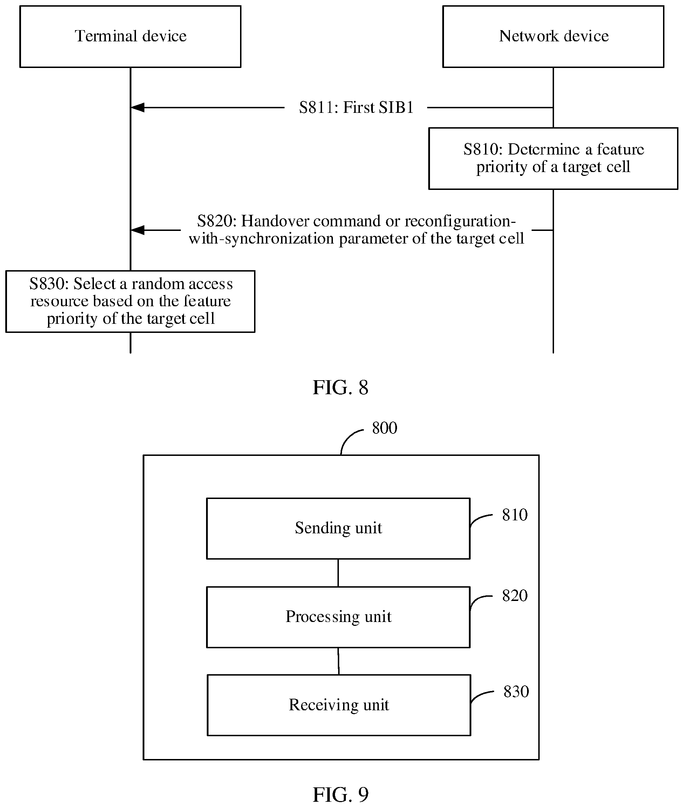

The following describes the communication method in detail with reference to FIG. 8. FIG. 8 is a schematic flowchart of still another communication method according to this application. The method includes the following steps.

S810: A network device determines a feature priority of a target cell.

Refer to the descriptions of S510, and details are not described herein again. A difference lies in that the network device determines the feature priority of the target cell in S810.

Specifically, that a network device determines a feature priority of a target cell may be understood as: A network device (for example, a network device #1) to which the target cell belongs determines the feature priority of the target cell, and sends the feature priority to the foregoing network device.

S820: The network device sends a handover command or a reconfiguration-with-synchronization parameter to a terminal device. In other words, the terminal device receives the handover command or the reconfiguration-with-synchronization parameter from the network device.

The handover command or the reconfiguration-with-synchronization parameter includes fifth indication information, and the fifth indication information indicates the feature priority of the target cell.

For example, the handover command or the reconfiguration-with-synchronization parameter may be included in an RRC reconfiguration message.

For example, the RRC reconfiguration message including the handover command or the reconfiguration-with-synchronization parameter may further include a second SIB of the target cell.

For example, the second SIB of the target cell may include the feature priority of the target cell.

For example, the second SIB of the target cell may be a SIB1 of the target cell.

In this embodiment, the network device may include the fifth indication information indicating the feature priority of the target cell in the handover command or the reconfiguration-with-synchronization parameter, to indicate the feature priority of the target cell. A network does not need to be restricted to including the SIB1 of the target cell in the handover command or the reconfiguration-with-synchronization parameter, to reduce a size of the RRC reconfiguration message during handover, and reduce load of the handover command, so that a message sending failure possibility is reduced, and a handover success possibility is increased. Moreover, the terminal device does not need to read the SIB 1 before the handover or before completing a RACH, to reduce a handover delay.

In a possible implementation, that the handover command or the reconfiguration-with-synchronization parameter includes fifth indication information may be: A common cell configuration (for example, ServingCellConfigCommon or spCellConfigCommon) includes the fifth indication information, where the fifth indication information indicates the feature priority of the target cell. The common cell configuration is included in the handover command or the reconfiguration-with-synchronization parameter. Therefore, when the UE receives the handover command or the reconfiguration-with-synchronization parameter, the UE may select a random access resource based on a feature priority parameter included in the handover command or the reconfiguration-with-synchronization parameter. The selected random access resource is for a random access process toward the target cell, to complete a handover process.

In another possible implementation, that the handover command or the reconfiguration-with-synchronization parameter of the target cell includes fifth indication information may be: A common cell configuration, the handover command, or the reconfiguration-with-synchronization parameter of the target cell includes the fifth indication information, where the fifth indication information indicates the feature priority of the target cell. In addition, a common cell configuration (for example, ServingCellConfigCommonSIB) in the second SIB includes the fifth indication information. In this implementation, a feature priority parameter directly included in the second SIB is removed, and the second SIB is a SIB 1 that is sent by the network device to the terminal device and that corresponds to the target cell.

It should be understood that the foregoing implementation is merely an example for describing how the network device sends the fifth indication information to the terminal device in the handover process, and does not constitute any limitation on the protection scope of this embodiment. Another manner of sending the fifth indication information to the terminal device in a handover scenario also falls within the protection scope of this application. For example, the fifth indication information is sent to the terminal device by adding new signaling instead of reusing existing signaling.

For example, the fifth indication information indicates feature priorities of a RedCap and CovEnh. For example, the feature priority parameter in the handover command or the reconfiguration-with-synchronization parameter may include the feature priorities of the RedCap and the CovEnh.

Optionally, for a manner in which the network device indicates the feature priority of the target cell in this embodiment, refer to the foregoing manner in which the network device indicates the feature priority (for example, in the embodiments shown in FIG. 5 to FIG. 7). Details are not described herein again.

Optionally, a procedure for the method shown in FIG. 8 further includes the following step.

S811: The network device sends a first SIB to the terminal device. In other words, the terminal device receives the first SIB from the network device.

The first SIB includes sixth indication information, and the sixth indication information indicates a feature priority of a source cell. The first SIB may be a SIB1 sent by the source cell. When accessing the source cell, the terminal needs to receive system information of the source cell, select a random access resource based on the feature priority in the system information, and perform a random access process toward the source cell through the selected random access resource, to access the source cell.

Optionally, a ServingCellConfigCommonSIB IE in the first SIB includes the sixth indication information.

It may be understood that the network device is a network device to which the source cell belongs, or the source cell is a cell controlled or managed by the network device. The source cell and the target cell may be a same cell, or may be different cells.

Specifically, the terminal device selects the random access resource based on the feature priority of the source cell, where the selected random access resource is for the random access process toward the source cell.

Further, after learning of the feature priority of the target cell by using the fifth indication information, the terminal device may select the random access resource based on the feature priority of the target cell. The procedure for the method shown in FIG. 8 further includes the following step.

S830: The terminal device selects the random access resource based on the feature priority of the target cell.

In a possible implementation, for a manner in which the terminal device selects the random access resource based on the feature priority of the target cell in this embodiment, refer to the descriptions of S540. Details are not described herein again.

In another possible implementation, a manner in which the terminal device selects the random access resource based on the feature priority of the target cell in this embodiment may be the RACH resource selection method corresponding to the foregoing example 1.

It should be understood that, in the embodiment shown in FIG. 8, how the terminal device selects the random access resource based on the feature priority of the target cell is not limited, and reference may be made to an existing resource selection method. This embodiment focuses on how the terminal device learns of the feature priority of the target cell.

The foregoing mainly describes the manner in which the network device indicates the feature priority of the target cell, so that the terminal device obtains the feature priority of the target cell. In addition, the terminal device may alternatively select the random access resource by using a predefined feature priority. For example, in a handover case, if there is no feature priority of the target cell, or if no feature priority of the target cell is available to the UE, the UE uses the predefined feature priority. For example, the UE selects the random access resource based on a feature priority (for example, the RedCap > the CovEnh) predefined in a protocol. For another example, the UE selects a random access resource that is not associated with any feature. For still another example, if a bandwidth part BWP selected by the UE is a RedCap-specific BWP (RedCap-specific BWP), the UE selects a random access resource that is applicable only to the RedCap. For the predefined feature priority, refer to the predefined feature priority or the predefined rule in the foregoing solution, and details are not described herein again.

The terminal device performs the random access process through the selected random access resource. For example, the terminal device may send a preamble or a message A (MsgA) on the selected random access resource.

In the embodiment shown in FIG. 8, the feature priority used by the UE in a contention-based random access scenario is specified, and a problem in the scenario that the UE cannot continue to perform the random access process because no feature priority is available to the UE is resolved.

It should be noted that this embodiment may be further applied to a dual-connectivity, multi-connectivity, or carrier aggregation scenario. This embodiment may also be applied when a secondary cell (for example, an SCell) needs to be added to a primary cell (for example, a PCell or a pSCell). In this case, the target cell may be replaced with the secondary cell, and the source cell may be replaced with the primary cell. The network device may be understood as a primary station. For other solutions or steps, refer to the foregoing descriptions. Details are not described herein again. It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, the network device or the terminal device) in a conventional network architecture is mainly used as an example for description. It should be understood that a specific form of the device is not limited in embodiments of this application. For example, all devices that can implement a same function in the future are usable in embodiments of this application.

It may be understood that in the foregoing method embodiments, the methods and operations implemented by the network device may alternatively be implemented by a component that may be used in the network device, and the methods and operations implemented by the terminal device may alternatively be implemented by a component that may be used in the terminal device.

With reference to FIG. 5 to FIG. 8, the foregoing describes in detail the communication method provided in embodiments of this application. The communication method is mainly described from a perspective of interaction between the network device and the terminal device. It may be understood that to implement the foregoing functions, the network device and the terminal device include corresponding hardware structures and/or software modules for implementing the functions.

A person skilled in the art should be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

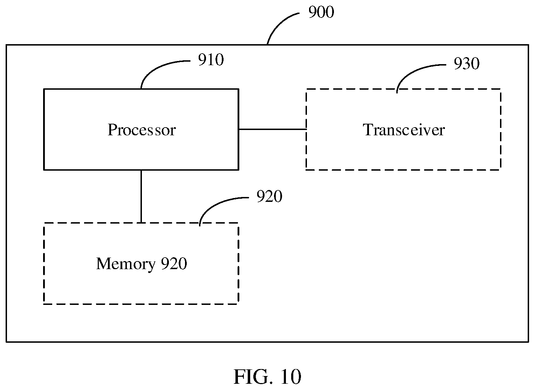

With reference to FIG. 9 and FIG. 10, the following describes in detail the communication apparatus provided in embodiments of this application. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit-end device or a receive-end device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. An example in which each functional module is obtained through division based on the corresponding function is used below for description.

FIG. 9 is a block diagram of an apparatus 800 according to an embodiment of this application. The apparatus 800 includes a sending unit 810, a processing unit 820, and a receiving unit 830. The sending unit 810 and the receiving unit 830 may implement corresponding communication functions, and the processing unit 820 is configured to process data. The sending unit 810 and the receiving unit 830 may also be referred to as a communication interface or a communication unit.

Optionally, the apparatus 800 may further include a storage unit. The storage unit may be configured to store instructions and/or data, and the processing unit 820 may read the instructions and/or the data in the storage unit, so that the apparatus implements the foregoing method embodiments.

The apparatus 800 may be configured to perform an action performed by a device (for example, the network device or the terminal device) in the foregoing method embodiments. In this case, the apparatus 800 may be the device or a component that may be configured in the device. The sending unit 810 and the receiving unit 830 are configured to perform operations related to receiving and sending of the device in the foregoing method embodiments. The processing unit 820 is configured to perform a processing related operation of the device in the foregoing method embodiments.

In a design, the apparatus 800 is configured to perform an action performed by the network device in the foregoing method embodiments.

In a possible implementation:

The processing unit 820 is configured to determine priorities of a plurality of features.

The sending unit 810 is configured to send first indication information to a terminal device, where the first indication information indicates the priorities of the plurality of features.

In another possible implementation:

The processing unit 820 is configured to: determine priorities of a plurality of features, and determine a first value of a feature in the plurality of features.

The sending unit 810 is configured to send third indication information to a terminal device, where the third indication information indicates the first value of the feature in the plurality of features.

In still another possible implementation:

The processing unit 820 is configured to: determine priorities of a plurality of features, and determine a non-negative integer corresponding to a feature in the plurality of features.

The sending unit 810 is configured to send second indication information to a terminal device, where the second indication information indicates the non-negative integer corresponding to the feature in the plurality of features.

In still another possible implementation:

The processing unit 820 is configured to determine a feature priority of a target cell.

The sending unit 810 is configured to send a handover command or a reconfiguration-with-synchronization parameter of the target cell to a terminal device, where the handover command or the reconfiguration-with-synchronization parameter of the target cell includes fifth indication information, and the fifth indication information indicates the feature priority of the target cell.

The apparatus 800 may implement the steps or procedures performed by the network device in the method embodiments according to embodiments of this application. The apparatus 800 may include the units configured to perform the methods performed by the network device in the method embodiments. In addition, the units in the apparatus 800 and the foregoing other operations and/or functions are separately for implementing corresponding procedures in the method embodiments of the network device in the method embodiments.

When the apparatus 800 is configured to perform the method in FIG. 5, the sending unit 810 may be configured to perform an information sending step, for example, step S520, in the method; the receiving unit 830 may be configured to perform an information receiving step in the method; and the processing unit 820 may be configured to perform a processing step, for example, step S510, in the method.

When the apparatus 800 is configured to perform the method in FIG. 6, the sending unit 810 may be configured to perform an information sending step, for example, step S630, in the method; the receiving unit 830 may be configured to perform an information receiving step in the method; and the processing unit 820 may be configured to perform a processing step, for example, steps S610 and S620, in the method.

When the apparatus 800 is configured to perform the method in FIG. 7, the sending unit 810 may be configured to perform an information sending step, for example, step S730, in the method; the receiving unit 830 may be configured to perform an information receiving step in the method; and the processing unit 820 may be configured to perform a processing step, for example, steps S710 and S720, in the method.

When the apparatus 800 is configured to perform the method in FIG. 8, the sending unit 810 may be configured to perform an information sending step, for example, step S820, in the method; and the processing unit 820 may be configured to perform a processing step, for example, step S810, in the method.

It should be understood that a specific process in which the units perform the foregoing corresponding steps is described in detail in the foregoing method embodiments, and for brevity, details are not described herein again.

In another design, the apparatus 800 is configured to perform an action performed by the terminal device in the foregoing method embodiments.

In a possible implementation:

The receiving unit 830 is configured to receive first indication information from a network device, where the first indication information indicates priorities of a plurality of features.

The processing unit 820 is configured to determine a first value of a feature in a feature combination based on the priorities of the plurality of features, where the first value of the feature is for determining a second value of the feature combination, the second value of the feature combination is for selecting a random access resource, the feature combination includes at least one feature, and the at least one feature belongs to the plurality of features.

In another possible implementation:

The receiving unit 830 is configured to receive second indication information from a network device, where the second indication information indicates a non-negative integer corresponding to a feature in a plurality of features.

The processing unit 820 is configured to determine a first value of a feature in a feature combination based on the non-negative integer corresponding to the feature, where the first value of the feature is for determining a second value of the feature combination, the second value of the feature combination is for selecting a random access resource, the feature combination includes at least one feature, and the at least one feature belongs to the plurality of features.

In still another possible implementation:

The receiving unit 830 is configured to receive third indication information from a network device, where the third indication information indicates a first value of a feature in priorities of a plurality of features.

The processing unit 820 is configured to determine a second value of a feature combination based on the first value of the feature, where the second value of the feature combination is for selecting a random access resource, and a first value of a third feature and a first value in a fourth-feature set satisfy the following relationship: The first value of the third feature is greater than a sum of the first value in the fourth-feature set, where the third feature is one of the plurality of features, and the fourth-feature set is a set of all features that are in the plurality of features and whose first values are less than the first value of the third feature.

In still another possible implementation:

The receiving unit 830 is configured to receive a handover command or a reconfiguration-with-synchronization parameter of a target cell from a network device, where the handover command or the reconfiguration-with-synchronization parameter of the target cell includes fifth indication information, and the fifth indication information indicates a feature priority of the target cell.

The processing unit 820 is configured to select a random access resource based on the feature priority of the target cell.

The apparatus 800 may implement the steps or procedures performed by the terminal device in the method embodiments according to embodiments of this application. The apparatus 800 may include the units configured to perform the methods performed by the terminal device in the method embodiments. In addition, the units in the apparatus 800 and the foregoing other operations and/or functions are separately for implementing corresponding procedures in the method embodiments of the terminal device in the method embodiments.

When the apparatus 800 is configured to perform the method in FIG. 5, the receiving unit 830 may be configured to perform an information receiving step, for example, step S520, in the method; and the processing unit 820 may be configured to perform a processing step, for example, steps S530 and S540, in the method.

When the apparatus 800 is configured to perform the method in FIG. 6, the receiving unit 830 may be configured to perform an information receiving step, for example, step S630, in the method; and the processing unit 820 may be configured to perform a processing step, for example, steps S640 and S650, in the method.

When the apparatus 800 is configured to perform the method in FIG. 7, the receiving unit 830 may be configured to perform an information receiving step, for example, step S730, in the method; and the processing unit 820 may be configured to perform a processing step, for example, steps S740 and S750, in the method.

When the apparatus 800 is configured to perform the method in FIG. 7, the receiving unit 830 may be configured to perform an information receiving step, for example, step S820, in the method; and the processing unit 820 may be configured to perform a processing step, for example, step S830, in the method.

It should be understood that a specific process in which the units perform the foregoing corresponding steps is described in detail in the foregoing method embodiments, and for brevity, details are not described herein again.

The processing unit 820 in the foregoing embodiment may be implemented by at least one processor or processor-related circuit. The sending unit 810 and the receiving unit 830 may be implemented by a transceiver or a transceiver-related circuit. The storage unit may be implemented by at least one memory.

As shown in FIG. 10, an embodiment of this application further provides an apparatus 900. The apparatus 900 includes a processor 910, and may further include one or more memories 920. The processor 910 is coupled to the memory 920. The memory 920 is configured to store a computer program or instructions and/or data. The processor 910 is configured to execute the computer program or the instructions and/or the data stored in the memory 920, so that the methods in the foregoing method embodiments are performed. Optionally, the apparatus 900 includes one or more processors 910.

Optionally, the memory 920 and the processor 910 may be integrated together or separately disposed.

Optionally, as shown in FIG. 10, the apparatus 900 may further include a transceiver 930. The transceiver 930 is configured to receive and/or send a signal. For example, the processor 910 is configured to control the transceiver 930 to receive and/or send a signal.

In a solution, the apparatus 900 is configured to implement an operation performed by a device (for example, the foregoing network device or terminal device) in the foregoing method embodiments.

An embodiment of this application further provides a computer-readable storage medium, where the computer-readable storage medium stores computer instructions for implementing the method performed by a device (for example, the foregoing network device or terminal device) in the foregoing method embodiments.

For example, when a computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by a device (for example, the foregoing network device or terminal device) in the foregoing method embodiments.

An embodiment of this application further provides a communication system. The communication system includes a device (for example, the foregoing network device or terminal device) in the foregoing embodiments.

For explanations and beneficial effects of related in any apparatuses provided above, refer to the corresponding method embodiments provided above. Details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include a plurality of forms below: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described herein is intended to include, but is not limited to, these memories and any other suitable type of memory.

A person of ordinary skill in the art may be aware that, in combination with the examples described in embodiments disclosed in this specification, units and steps can be implemented by electronic hardware or a combination of computer software and electronic hardware. Whether the functions are performed by hardware or software depends on particular applications and design constraints of the technical solutions. A person skilled in the art may use different methods to implement the described functions for the particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   receiving, by a terminal device, first indication information from a network device, wherein the first indication information indicates priorities of a plurality of features; and
   determining, by the terminal device, a first value of a feature in a feature combination based on the priorities of the plurality of features, wherein the first value of the feature is for determining a second value of the feature combination, and the second value of the feature combination is for selecting a random access resource, wherein the feature combination comprises at least one feature, and the at least one feature belongs to the plurality of features.

2. The method according to claim 1, wherein a first value of a first feature and a first value in a set of second features satisfy the following relationship:

   the first value of the first feature is greater than a sum of the first value in the set of second features, wherein the first feature is one of the at least one feature, and the set of second features is a set of all features that are in the at least one feature and whose priorities are lower than a priority of the first feature.

3. The method according to claim 1 or 2, wherein a priority of the at least one feature and a non-negative integer corresponding to the at least one feature satisfy the following relationship:

   a higher priority of a feature indicates a larger non-negative integer corresponding to the feature, wherein the non-negative integer corresponding to the feature is for determining a first value of the feature.

4. The method according to claim 3, wherein the non-negative integer corresponding to the feature and the first value of the feature satisfy the following relationship:

$$Z = X^N + Y, \text{ or } Z = X^N$$

   wherein Z represents the first value of the feature, N represents the non-negative integer corresponding to the feature, X is an integer greater than or equal to 1, and Y is a constant.

5. The method according to claim 1 or 2, wherein a priority of the at least one feature and a non-negative integer corresponding to the at least one feature satisfy the following relationship:

   a higher priority of a feature indicates a smaller non-negative integer corresponding to the feature, wherein the non-negative integer corresponding to the feature is for determining a first value of the feature.

6. The method according to claim 5, wherein the non-negative integer corresponding to the feature and the first value of the feature satisfy the following relationship:

$$Z = X^{M1-N} + Y, \text{ or } Z = X^{M1-N}$$

wherein Z represents the first value of the feature, N represents the non-negative integer corresponding to the feature, X is an integer greater than or equal to 1, Y is a constant, and M1 is related to a quantity of the at least one feature or is related to a quantity of the plurality of features.

7. The method according to any one of claims 3 to 6, wherein the non-negative integer corresponding to the at least one feature is M2 consecutive positive integers from 0 to M2-1, and M2 is the quantity of the at least one feature.

8. The method according to any one of claims 1 to 7, wherein the second value of the feature combination is a sum of a first value of the at least one feature comprised in the feature combination.

9. The method according to claim 8, wherein the method further comprises:

selecting, by the terminal device, a random access resource for a first feature combination, wherein a second value of the first feature combination is largest among a plurality of second values of a plurality of feature combinations, and a feature comprised in one of the plurality of feature combinations is one or more of features in a feature combination for triggering a random access process.

10. A communication method, comprising:

receiving, by a terminal device, second indication information from a network device, wherein the second indication information indicates a non-negative integer corresponding to a feature in a plurality of features; and determining, by the terminal device, a first value of a feature in a feature combination based on the non-negative integer corresponding to the feature, wherein the first value of the feature is for determining a second value of the feature combination, and the second value of the feature combination is for selecting a random access resource, wherein the feature combination comprises at least one feature, and the at least one feature belongs to the plurality of features.

11. The method according to claim 10, wherein a first value of a first feature and a first value in a set of second features satisfy the following relationship:

the first value of the first feature is greater than a sum of the first value in the set of second features, wherein the first feature is one of the at least one feature, and the set of second features is a set of all features that are in the at least one feature and whose first values are less than the first value of the first feature.

12. The method according to claim 10 or 11, wherein the first value of the feature satisfies the following relationship:

$$Z = X^{N} + Y, \text{ or } Z = X^{N}$$

wherein Z represents the first value of the feature, N represents the non-negative integer corresponding to the feature, X is an integer greater than or equal to 1, and Y is a constant.

13. The method according to claim 10 or 11, wherein the first value of the feature satisfies the following relationship:

$$Z = X^{M1-N} + Y, \text{ or } Z = X^{M1-N}$$

wherein Z represents the first value of the feature, N represents the non-negative integer corresponding to the feature, X is an integer greater than or equal to 1, Y is a constant, and M1 is related to a quantity of the at least one feature or is related to a quantity of the plurality of features.

14. The method according to any one of claims 10 to 13, wherein non-negative integers corresponding to the plurality of features are M3 consecutive positive integers from 0 to M3-1, and M3 is the quantity of the plurality of features.

15. The method according to any one of claims 10 to 14, wherein the second value of the feature combination is a sum of a first value of the at least one feature in the feature combination.

16. The method according to claim 15, wherein the method further comprises:

selecting, by the terminal device, a random access resource for a first feature combination, wherein a second value of the first feature combination is largest among a plurality of second values of a plurality of feature combinations, and a feature comprised in one of the plurality of feature combinations is one or more of features in a feature combination for triggering a random access process.

17. A communication apparatus, comprising:

a receiving unit, configured to receive first indication information from a network device, wherein the first indication information indicates priorities of a plurality of features; and
a processing unit, configured to determine a first value of a feature in a feature combination based on the priorities of the plurality of features, wherein the first value of the feature is for determining a second value of the feature combination, and the second value of the feature combination is for selecting a random access resource, wherein the feature combination comprises at least one feature, and the at least one feature belongs to the plurality of features.

18. The apparatus according to claim 17, wherein a first value of a first feature and a first value in a set of second features satisfy the following relationship:
the first value of the first feature is greater than a sum of the first value in the set of second features, wherein the first feature is one of the at least one feature, and the set of second features is a set of all features that are in the at least one feature and whose priorities are lower than a priority of the first feature.

19. The apparatus according to claim 17 or 18, wherein a priority of the at least one feature and a non-negative integer corresponding to the at least one feature satisfy the following relationship: a higher priority of a feature indicates a larger non-negative integer corresponding to the feature, wherein the non-negative integer corresponding to the feature is for determining a first value of the feature.

20. The apparatus according to claim 19, wherein the non-negative integer corresponding to the feature and the first value of the feature satisfy the following relationship:

$$Z=X^N+Y, \text{ or } Z=X^N$$

wherein Z represents the first value of the feature, N represents the non-negative integer corresponding to the feature, X is an integer greater than or equal to 1, and Y is a constant.

21. The apparatus according to claim 17 or 18, wherein a priority of the at least one feature and a non-negative integer corresponding to the at least one feature satisfy the following relationship: a higher priority of a feature indicates a smaller non-negative integer corresponding to the feature, wherein the non-negative integer corresponding to the feature is for determining a first value of the feature.

22. The apparatus according to claim 21, wherein the non-negative integer corresponding to the feature and the first value of the feature satisfy the following relationship:

$$Z=X^{M1-N}+Y, \text{ or } Z=X^{M1-N}$$

wherein Z represents the first value of the feature, N represents the non-negative integer corresponding to the feature, X is an integer greater than or equal to 1, Y is a constant, and M1 is related to a quantity of the at least one feature or is related to a quantity of the plurality of features.

23. The apparatus according to any one of claims 19 to 22, wherein the non-negative integer corresponding to the at least

EP 4 492 904 A1

one feature is M2 consecutive positive integers from 0 to M2-1, and M2 is the quantity of the at least one feature.

24. The apparatus according to any one of claims 19 to 23, wherein the second value of the feature combination is a sum of a first value of the at least one feature comprised in the feature combination.

25. The apparatus according to claim 24, wherein the processing unit is further configured to select a random access resource for a first feature combination, wherein
a second value of the first feature combination is largest among a plurality of second values of a plurality of feature combinations, and a feature comprised in one of the plurality of feature combinations is one or more of features in a feature combination for triggering a random access process.

26. A communication apparatus, comprising:

a receiving unit, configured to receive second indication information from a network device, wherein the second indication information indicates a non-negative integer corresponding to a feature in a plurality of features; and
a processing unit, configured to determine a first value of a feature in a feature combination based on the non-negative integer corresponding to the feature, wherein the first value of the feature is for determining a second value of the feature combination, and the second value of the feature combination is for selecting a random access resource, wherein
the feature combination comprises at least one feature, and the at least one feature belongs to the plurality of features.

27. The apparatus according to claim 26, wherein a first value of a first feature and a first value in a set of second features satisfy the following relationship:

the first value of the first feature is greater than a sum of the first value in the set of second features, wherein the first feature is one of the at least one feature, and the set of second features is a set of all features that are in the at least one feature and whose first values are less than the first value of the first feature.

28. The apparatus according to claim 26 or 27, wherein the first value of the feature satisfies the following relationship:

$$Z=X^{N}+Y, \text{ or } Z=X^{N}$$

wherein Z represents the first value of the feature, N represents the non-negative integer corresponding to the feature, X is an integer greater than or equal to 1, and Y is a constant.

29. The apparatus according to claim 26 or 27, wherein the first value of the feature satisfies the following relationship:

$$Z=X^{M1-N}+Y, \text{ or } Z=X^{M1-N}$$

wherein Z represents the first value of the feature, N represents the non-negative integer corresponding to the feature, X is an integer greater than or equal to 1, Y is a constant, and M1 is related to a quantity of the at least one feature or is related to a quantity of the plurality of features.

30. The apparatus according to any one of claims 26 to 29, wherein the non-negative integers corresponding to the plurality of features are M3 consecutive positive integers from 0 to M3-1, and M3 is the quantity of the plurality of features.

31. The apparatus according to any one of claims 26 to 30, wherein the second value of the feature combination is a sum of a first value of the at least one feature in the feature combination.

32. The apparatus according to claim 31, wherein the processing unit is further configured to select a random access resource for a first feature combination, wherein
a second value of the first feature combination is largest among a plurality of second values of a plurality of feature combinations, and a feature comprised in one of the plurality of feature combinations is one or more of features in a feature combination for triggering a random access process.

33. A communication apparatus, comprising:

   a memory, configured to store a computer program; and
   a processor, configured to execute the computer program stored in the memory, to enable the communication apparatus to perform the method according to any one of claims 1 to 16.

34. A computer-readable storage medium, wherein the computer-readable storage medium stores computer instructions; and when the computer instructions are run on a computer, the method according to any one of claims 1 to 16 is performed.

35. A communication method, comprising:

   receiving, by a terminal device, a handover command or a reconfiguration-with-synchronization parameter from a network device, wherein the handover command or the reconfiguration-with-synchronization parameter comprises fifth indication information, the fifth indication information indicates a feature priority of a target cell, and the feature priority of the target cell comprises a priority of one or more features in reduced capability RedCap, network slicing, small data transmission SDT, and coverage enhancement; and
   selecting, by the terminal device, a random access resource based on the feature priority of the target cell.

36. The method according to claim 35, wherein before the receiving, by a terminal device, a handover command or a reconfiguration-with-synchronization parameter from a network device, the method further comprises:

   receiving, by the terminal device, a first SIB from the network device, wherein the first SIB comprises sixth indication information, the sixth indication information indicates a feature priority of a source cell, and the first SIB is a SIB corresponding to the source cell; and
   selecting, by the terminal device, a random access resource based on the feature priority of the source cell.

37. The method according to claim 35 or 36, wherein
   the handover command or the reconfiguration-with-synchronization parameter is comprised in a radio resource control RRC reconfiguration message.

38. The method according to claim 37, wherein
   the RRC reconfiguration message comprises a second SIB, the second SIB comprises a feature priority parameter of the target cell, and the second SIB is a SIB corresponding to the target cell.

39. A communication method, comprising:

   determining, by a network device, a feature priority of a target cell; and
   sending, by the network device, a handover command or a reconfiguration-with-synchronization parameter to a terminal device, wherein the handover command or the reconfiguration-with-synchronization parameter comprises fifth indication information, the fifth indication information indicates the feature priority of the target cell, and the feature priority of the target cell comprises a priority of one or more features in reduced capability RedCap, network slicing, small data transmission SDT, and coverage enhancement.

40. The method according to claim 39, wherein before the sending, by the network device, a handover command or a reconfiguration-with-synchronization parameter to a terminal device, the method further comprises:
   sending, by the network device, a first SIB to the terminal device, wherein the first SIB comprises sixth indication information, the sixth indication information indicates a feature priority of a source cell, and the first SIB is a SIB corresponding to the source cell.

41. The method according to claim 39 or 40, wherein the handover command or the reconfiguration-with-synchronization parameter is comprised in a radio resource control RRC reconfiguration message.

42. The method according to claim 41, wherein the RRC reconfiguration message comprises a second SIB, the second SIB comprises a feature priority parameter of the target cell, and the second SIB is a SIB corresponding to the target cell.

43. A communication apparatus, comprising:

a receiving unit, configured to receive a handover command or a reconfiguration-with-synchronization parameter from a network device, wherein the handover command or the reconfiguration-with-synchronization parameter comprises fifth indication information, the fifth indication information indicates a feature priority of a target cell, and the feature priority of the target cell comprises a priority of one or more features in reduced capability RedCap, network slicing, small data transmission SDT, and coverage enhancement; and

a processing unit, configured to select a random access resource based on the feature priority of the target cell.

44. The apparatus according to claim 43, wherein before the receiving unit receives the handover command or the reconfiguration-with-synchronization parameter from the network device, the receiving unit is further configured to receive a first SIB from the network device, wherein the first SIB comprises sixth indication information, the sixth indication information indicates a feature priority of a source cell, and the first SIB is a SIB corresponding to the source cell; and

the processing unit is further configured to select a random access resource based on the feature priority of the source cell.

45. The apparatus according to claim 43 or 44, wherein the handover command or the reconfiguration-with-synchronization parameter is comprised in a radio resource control RRC reconfiguration message.

46. The apparatus according to claim 45, wherein the RRC reconfiguration message comprises a second SIB, the second SIB comprises a feature priority parameter of the target cell, and the second SIB is a SIB corresponding to the target cell.

47. A communication apparatus, comprising:

a processing unit, configured to determine a feature priority of a target cell; and

a sending unit, configured to send a handover command or a reconfiguration-with-synchronization parameter to a terminal device, wherein the handover command or the reconfiguration-with-synchronization parameter comprises fifth indication information, the fifth indication information indicates the feature priority of the target cell, and the feature priority of the target cell comprises a priority of one or more features in reduced capability RedCap, network slicing, small data transmission SDT, and coverage enhancement.

48. The apparatus according to claim 47, wherein before the sending unit sends the handover command or the reconfiguration-with-synchronization parameter to the terminal device, the sending unit is further configured to send a first SIB to the terminal device, wherein the first SIB comprises sixth indication information, the sixth indication information indicates a feature priority of a source cell, and the first SIB is a SIB corresponding to the source cell.

49. The apparatus according to claim 47 or 48, wherein the handover command or the reconfiguration-with-synchronization parameter is comprised in a radio resource control RRC reconfiguration message.

50. The apparatus according to claim 49, wherein the RRC reconfiguration message comprises a second SIB, the second SIB comprises a feature priority parameter of the target cell, and the second SIB is a SIB corresponding to the target cell.

FIG. 1

(a)

(b)

(c)

(d)

FIG. 2

Terminal device | Network device

S310: Random access preamble →

← S320: RAR

S330: Msg3 →

← S340: Contention resolution message

## FIG. 3

Terminal device | Network device

S410: MsgA →

← S420: MsgB

## FIG. 4

Terminal device | Network device

S510: Determine priorities of a plurality of features

← S520: First indication information

S530: Determine a first value of a feature in a feature combination based on the priorities of the features

S540: Select a random access resource

## FIG. 5

```
┌─────────────────────┐                          ┌─────────────────────┐
│   Terminal device   │                          │   Network device    │
└─────────────────────┘                          └─────────────────────┘
          │                                                  │
          │                          ┌───────────────────────────────────────┐
          │                          │ S610: Determine priorities of a       │
          │                          │ plurality of features                 │
          │                          └───────────────────────────────────────┘
          │                                                  │
          │                          ┌───────────────────────────────────────┐
          │                          │ S620: Determine a first value of a    │
          │                          │ feature in the plurality of features  │
          │                          └───────────────────────────────────────┘
          │                                                  │
          │◄──────── S630: Third indication information ──────┤
          │                                                  │
┌───────────────────────┐                                    │
│ S640: Determine a     │                                    │
│ second value of a     │                                    │
│ feature combination   │                                    │
└───────────────────────┘                                    │
┌───────────────────────┐                                    │
│ S650: Select a random │                                    │
│ access resource       │                                    │
└───────────────────────┘                                    │
          │                                                  │
```

FIG. 6

```
┌─────────────────────┐                          ┌─────────────────────┐
│   Terminal device   │                          │   Network device    │
└─────────────────────┘                          └─────────────────────┘
          │                                                  │
          │                          ┌───────────────────────────────────────┐
          │                          │ S710: Determine priorities of a       │
          │                          │ plurality of features                 │
          │                          └───────────────────────────────────────┘
          │                                                  │
          │                          ┌───────────────────────────────────────┐
          │                          │ S720: Determine a non-negative integer│
          │                          │ corresponding to a feature            │
          │                          └───────────────────────────────────────┘
          │                                                  │
          │◄──────── S730: Second indication information ─────┤
          │                                                  │
┌───────────────────────┐                                    │
│ S740: Determine a     │                                    │
│ first value of a      │                                    │
│ feature in a feature  │                                    │
│ combination           │                                    │
└───────────────────────┘                                    │
┌───────────────────────┐                                    │
│ S750: Select a random │                                    │
│ access resource       │                                    │
└───────────────────────┘                                    │
          │                                                  │
```

FIG. 7

Terminal device

Network device

S811: First SIB1

S810: Determine a feature priority of a target cell

S820: Handover command or reconfiguration-with-synchronization parameter of the target cell

S830: Select a random access resource based on the feature priority of the target cell

FIG. 8

800

Sending unit — 810

Processing unit — 820

Receiving unit — 830

FIG. 9

FIG. 10

## INTERNATIONAL SEARCH REPORT

International application No.

**PCT/CN2023/083607**

### A. CLASSIFICATION OF SUBJECT MATTER

H04W 74/00(2009.01)i

According to International Patent Classification (IPC) or to both national classification and IPC

### B. FIELDS SEARCHED

Minimum documentation searched (classification system followed by classification symbols)

IPC: H04W, H04L, H04M, H04B

Documentation searched other than minimum documentation to the extent that such documents are included in the fields searched

Electronic data base consulted during the international search (name of data base and, where practicable, search terms used)

CNTXT, CNKI, 3GPP, WPABSC, ENTXTC: 终端, 网络, 小区, 随机接入, 优先级, 非负整数, 降低能力, 切片, 小包数据传输, 覆盖增强, 无线资源控制, terminal, network, cell, random, access, priority, nonnegative, integer, reduce, capacity, RedCap, slice, SDT, cover, enhancement, RRC

### C. DOCUMENTS CONSIDERED TO BE RELEVANT

| Category* | Citation of document, with indication, where appropriate, of the relevant passages | Relevant to claim No. |
|---|---|---|
| Y | CN 114007203 A (HUAWEI TECHNOLOGIES CO., LTD.) 01 February 2022 (2022-02-01) description, paragraphs 6-34, and figures 1-8 | 1, 3, 5, 7, 10, 14, 17, 19, 21, 23, 26, 30, 33, 34 |
| Y | CN 112514505 A (GUANGDONG OPPO MOBILE COMMUNICATIONS CO., LTD.) 16 March 2021 (2021-03-16) description, paragraphs 1-50, and figure 1 | 1, 3, 5, 7, 10, 14, 17, 19, 21, 23, 26, 30, 33, 34 |
| A | WO 2022052059 A1 (HUAWEI TECHNOLOGIES CO., LTD.) 17 March 2022 (2022-03-17) entire document | 1-50 |
| A | WO 2021027821 A1 (VIVO MOBILE COMMUNICATION CO., LTD.) 18 February 2021 (2021-02-18) entire document | 1-50 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 June 2023** | **14 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/083607**

| Patent document cited in search report | | | Publication date (day/month/year) | Patent family member(s) | Publication date (day/month/year) |
|---|---|---|---|---|---|
| CN | 114007203 | A | 01 February 2022 | None | |
| CN | 112514505 | A | 16 March 2021 | None | |
| WO | 2022052059 | A1 | 17 March 2022 | None | |
| WO | 2021027821 | A1 | 18 February 2021 | None | |

Form PCT/ISA/210 (patent family annex) (July 2022)

**REFERENCES CITED IN THE DESCRIPTION**

**Patent documents cited in the description**

- CN 202210379989
- CN 202210982583